# EUROPEAN PATENT SPECIFICATION

(11) **EP 3 639 618 B1**
(45) Date of publication and mention of the grant of the patent: **20.05.2026**
(21) Application number: 18738084.5
(22) Date of filing: 14.06.2018
(51) Int. Cl.: H04W 76/27

(54) **L2 HANDLING FOR BEARER TYPE CHANGE**
L2-HANDHABUNG FÜR TRÄGERTYPWECHSEL
MANIPULATION DE COUCHE L2 POUR CHANGEMENT DE TYPE DE PORTEUSE

(30) Priority: 16.06.2017 US 201762520867 P; 26.06.2017 US 201762525001 P
(43) Date of publication of application: 22.04.2020
(73) Proprietor: Apple Inc., Cupertino, CA 95014 (US)
(72) Inventor: LIM, Seau S., Swindon Wiltshire SN1 4GU (GB); PALAT, Sudeep K., Cheltenham Gloucestershire GL51 OGG (GB); ZHANG, Yujian, Beijing 100081 (CN); HEO, Youn Hyoung, Seoul 150-705 (KR); BURBIDGE, Richard, Shrivenham Oxfordshire SN6 8HR (GB)
(74) Representative: Lang, Johannes
(86) International application number: PCT/US2018/037522
(87) International publication number: WO 2018/232108

(56) References cited:
- INTEL CORPORATION: "In supporting unified split bearer option for EN-DC", vol. RAN WG3, no. Hangzhou, China; 20170515 - 20170519, 14 May 2017 (2017-05-14), XP051276560, Retrieved from the Internet <URL:http://www.3gpp.org/ftp/Meetings_3GPP_SYNC/RAN3/Docs/> [retrieved on 20170514]

## Description

### CROSS-REFERENCE TO RELATED APPLICATIONS

The present application claims the benefit of US Provisional Application No. 62/520,867 (P119905Z) filed June 16, 2017 and the benefit of US Provisional Application No. 62/525,001 (P120116Z) filed June 26, 2017.

### BACKGROUND

Currently, there are many different bearer types for Fifth Generation New Radio (5G NR) systems including master cell group (MCG) bearer, secondary cell group (SCG) bearer, MCG split bearer, and SCG split bearer. There is an attempt to merge the MCG split bearer and the SCG split bearer. Even with this, there are many different types of bearer type changes to be defined and the behavior for each. Furthermore, extension of split bearers to more than two cell groups is difficult with the current model.

For Long-Term Evolution and New Radio (LTE-NR) dual connectivity (DC), the following should be considered for Layer 2 (L2 handling). First, a change of an LTE Packet Data Convergence Protocol (PDCP) entity to/from an NR PDCP entity should be considered. Second, with a unified bearer for an SCG split bearer and an MCG split bearer should be considered split bearer), a user equipment (UE) may not be able to identify whether there is a need to perform PDCP and/or RLC re-establishment. Third, a Secondary Node (SN) change with UE mobility may not result in PDCP change and thus no security configuration change. Fourth, other than an SCG media access control (MAC) reset, an MCG MAC reset also may be provided for an SCG split bearer with SN change with UE mobility and also bearer type change between an MCG split bearer and an SCG split bearer.

The document "In supporting unified split bearer option for EN-DC;" 3GPP RAN WG3 Meeting 96; R3-171777; Intel Corporation, discloses a motivation to unify split bearers of different types. Specifically, the document states that the unified split bearer is better to be provided separately to the MCG configuration or the SCG configuration.

### SUMMARY OF INVENTION

The invention is defined in the appended independent claims. Embodiments of the invention are defined in the dependent claims. The use of the word "embodiment" below in this description merely implies the illustration of examples or exemplary embodiments, if not otherwise defined by the appended claims. The scope of the invention is thus defined by the appended claims.

### DESCRIPTION OF THE DRAWING FIGURES

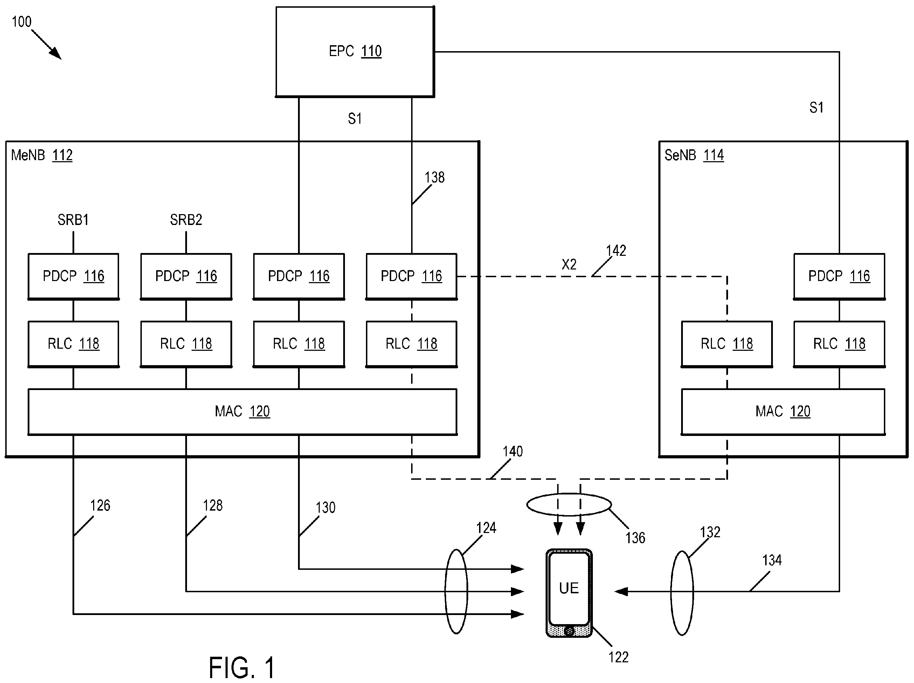

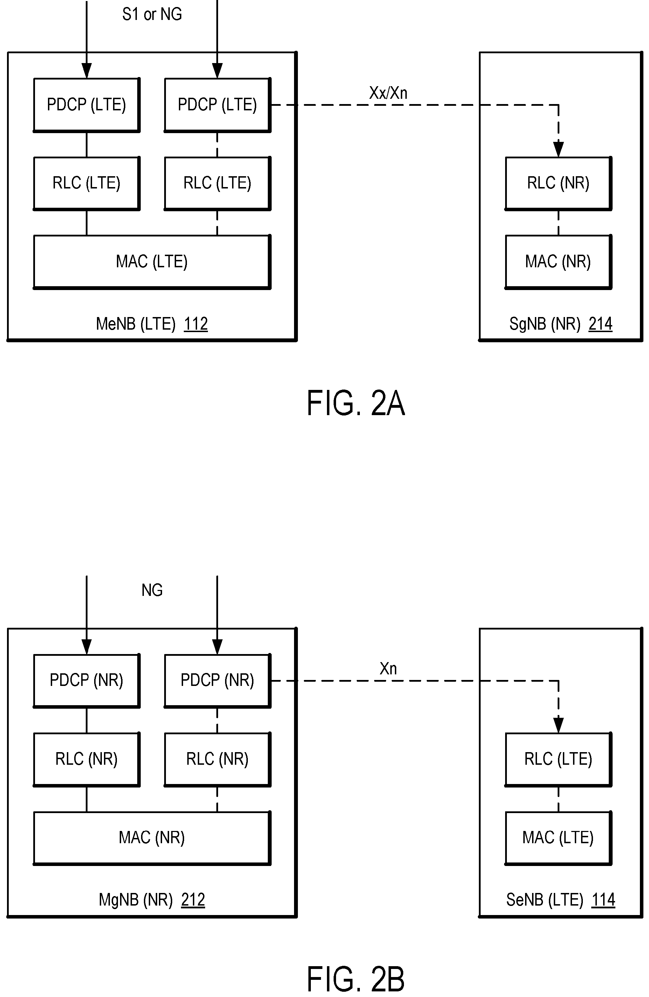

Claimed subject matter is particularly pointed out and distinctly claimed in the concluding portion of the specification. However, such subject matter may be understood by reference to the following detailed description when read with the accompanying drawings in which: FIG. 1 is a diagram of a Layer 2 (L2) radio network architecture including master cell group (MCG) bearers, a secondary cell group (SCG) bearer, and split bearer arrangements in accordance with one or more embodiments; FIG. 2A and FIG. 2B are diagrams of a Long-Term Evolution-New Radio (LTE-NR) split bearer arrangement via a master cell group (MCG) in accordance with one or more embodiments;
FIG. 3A and FIG. 3B are diagrams of a Long-Term Evolution-New Radio (LTE-NR) split bearer arrangement via a secondary cell group (SCG) in accordance with one or more embodiments;
FIG. 4 is a diagram of a radio resource control (RRC) connection reconfiguration procedure in accordance with one or more embodiments;
FIG. 5 is a diagram illustrating a change between a single connectivity bearer to multi-connectivity bearer by configuring or releasing one or more logical channels in accordance with one or more embodiments;
FIG. 6 and FIG. 7 are diagrams of a radio resource control (RRC) reconfiguration procedure illustrating a reconfiguration complete process and an RR connection re-establishment process, respectively, in accordance with one or more embodiments.
FIG. 8 illustrates an architecture of a system of a network in accordance with some embodiments;
FIG. 9 illustrates example components of a device in accordance with some embodiments; and
FIG. 10 illustrates example interfaces of baseband circuitry in accordance with some embodiments.

It will be appreciated that for simplicity and/or clarity of illustration, elements illustrated in the figures have not necessarily been drawn to scale. For example, the dimensions of some of the elements may be exaggerated relative to other elements for clarity. Further, if considered appropriate, reference numerals have been repeated among the figures to indicate corresponding and/or analogous elements.

### DETAILED DESCRIPTION

In the following detailed description, numerous specific details are set forth to provide a thorough understanding of claimed subject matter. It will, however, be understood by those skilled in the art that claimed subject matter may be practiced without these specific details. In other instances, well-known methods, procedures, components and/or circuits have not been described in detail.

Referring now to FIG. 1, a diagram of a Layer 2 (L2) radio network architecture including master cell group (MCG) bearers, a secondary cell group (SCG) bearer, and split bearer arrangements in accordance with one or more embodiments will be discussed. FIG. 1 shows the Layer 2 (L2) handling for Long-Term Evolution (LTE) dual connectivity (DC), referred to as LTE-LTE DC, between a master evolved NodeB (MeNB) and a secondary eNB (SeNB). In network 100, an evolved packet core (EPC) 110 controls MeNB 112 and SeNB 114 via an S1 interface. The MeNB 112 and SeNB 114 may include one or more of the following Layer 2 entities: Packet Data Convergence Protocol (PDCP) 116, Radio Link Control (RLC), and Media Access Control (MAC) 120. In a dual connectivity arrangement, either MeNB 112 or SeNB 114, or both, may deliver data to user equipment 122 over one or more bearer types. Bearer types may include Master Cell Group (MCG) bearer types 124 including Signaling Radio Bearer (SRB1) 126, Signaling Radio Bearer (SRB2) 128, and bearer 130. Bearer types also may include Secondary Cell Group (SCG) bearer types 132 including bearer 134. Bearer types also may include split bearer types 136, for example wherein a bearer 128 in MeNB 112 is split between the MeNB 112 and the SeNB 114 into split bearer 140 and split bearer 142. Split bearer 142 is provided from MeNB 112 to SeNB 114 via an X2 interface such that split bearer 140 is provided to UE 122 from MeNB 112, and split bearer 142 is provided to UE 122 from SeNB.

In LTE DC, an SCG change may be performed for a bearer type change as follows. An SCG change is a synchronous SCG reconfiguration procedure involving random access (RA) to the Primary Secondary Cell (PSCell) and including reset/re-establishment of Layer 2, and if SCG data radio bearers (DRBs) are configured, a refresh of security. The procedure is used in a number of different scenarios, for example SCG establishment, PSCell change, Key refresh, and/or change of DRB type. The UE 122 performs the SCG change related actions upon receiving an *RRCConnectionReconfiguration* message including *mobilityControlInfoSCG,* for example as described in Third Generation Partnership Project (3GPP) Technical Specification (TS) 36.331 in section 5.3.10.10.

The details of the L2 handling (PDCP and RLC and MAC entities handling) for the bearer type addition and change are provided in 3GPP TS 36.331 Section 5.3.10.3a1 (MCG and SCG L2 handling on PDCP and RLC) and Section 5.3.10.10 (SCG change procedure), both sections being reproduced below.

### 5.3.10.3a1 DC specific DRB addition or reconfiguration

For the *drb-Identity* value for which this procedure is initiated, the UE shall:
1>if *drb-ToAddModListSCG* is received and includes the *drb-Identity* value; and *drb-Identity* value is not part of the current UE configuration (i.e. DC specific DRB establishment):
   2>if *drb-ToAddModList* is received and includes the *drb-Identity* value (i.e. add split DRB):
      3> establish a PDCP entity and configure it with the current MCG security configuration and in accordance with the *pdcp-Config* included in *drb-ToAddModList;*
      3> establish an MCG RLC entity and an MCG DTCH logical channel in accordance with the *rlc-Config, logicalChannelIdentity* and *logicalChannelConfig* included in *drb-ToAddModList;*
      3> establish an SCG RLC entity and an SCG DTCH logical channel in accordance with the *rlc-ConfigSCG, logicalChannelIdentitySCG* and *logicalChannelConfigSCG* included in *drb-ToAddModListSCG;*
   2>else (i.e. add SCG DRB):
      3> establish a PDCP entity and configure it with the current SCG security configuration and in accordance with the *pdcp-Config* included in *drb-ToAddModListSCG;*
      3> establish an SCG RLC entity or entities and an SCG DTCH logical channel in accordance with the *rlc-ConfigSCG, logicalChannelIdentitySCG* and *logicalChannelConfigSCG* included in *drb-ToAddModListSCG;*
   2> indicate the establishment of the DRB(s) and the *eps-BearerIdentity* of the established DRB(s) to upper layers;
1>else (i.e. DC specific DRB modification; *drb-ToAddModList* and/ or *drb-ToAddModListSCG* received):
   2>if the DRB indicated by *drb-Identity* is a split DRB:
      3>if *drb-ToAddModList* is received and includes the *drb-Identity* value, while for this entry *drb-TypeChange* is included and set to *toMCG* (i.e. split to MCG):
         4>release the SCG RLC entity and the SCG DTCH logical channel;
         4>reconfigure the PDCP entity in accordance with the *pdcp-Config,* if included in *drb-ToAddModList;*
         4>reconfigure the MCG RLC entity and/ or the MCG DTCH logical channel in accordance with the *rlc-Config* and *logicalChannelConfig,* if included in *drb-ToAddModList;*
      3>else (i.e. reconfigure split):
         4>reconfigure the PDCP entity in accordance with the *pdcp-Config,* if included in *drb-ToAddModList;*
         4>reconfigure the MCG RLC entity and/ or the MCG DTCH logical channel in accordance with the *rlc-Config* and *logicalChannelConfig,* if included in *drb-ToAddModList;*
         4>reconfigure the SCG RLC entity and/ or the SCG DTCH logical channel in accordance with the *rlc-ConfigSCG* and *logicalChannelConfigSCG,* if included in *drb-ToAddModListSCG;*
   2>if the DRB indicated by *drb-Identity* is an SCG DRB:
      3>if *drb-ToAddModList* is received and includes the *drb-Identity* value, while for this entry *drb-TypeChange* is included and set to *toMCG* (i.e. SCG to MCG):
         4>reconfigure the PDCP entity with the current MCG security configuration and in accordance with the *pdcp-Config,* if included in *drb-ToAddModList;*
         4>reconfigure the SCG RLC entity or entities and the SCG DTCH logical channel to be an MCG RLC entity or entities and an MCG DTCH logical channel;
         4>reconfigure the MCG RLC entity or entities and/ or the MCG DTCH logical channel in accordance with the *rlc-Config, logicalChannelIdentity* and *logicalChannelConfig,* if included in *drb-ToAddModList;*
      3>else (i.e. *drb-ToAddModListSCG* is received and includes the *drb-Identity* value i.e. reconfigure SCG):
         4>reconfigure the PDCP entity in accordance with the *pdcp-Config,* if included in *drb-ToAddModListSCG;*
         4>reconfigure the SCG RLC entity or entities and/ or the SCG DTCH logical channel in accordance with the *rlc-ConfigSCG* and *logicalChannelConfigSCG,* if included in *drb-ToAddModListSCG;*
   2>if the DRB indicated by *drb-Identity* is an MCG DRB:
      3>if *drb-ToAddModListSCG* is received and includes the *drb-Identity* value, while for this entry *drb-Type* is included and set to *split* (i.e. MCG to split):
         4>reconfigure the PDCP entity in accordance with the *pdcp-Config,* if included in *drb-ToAddModList;*
         4>reconfigure the MCG RLC entity and/ or the MCG DTCH logical channel in accordance with the *rlc-Config* and *logicalChannelConfig,* if included in *drb-ToAddModList;*
         4> establish an SCG RLC entity and an SCG DTCH logical channel in accordance with the *rlc-ConfigSCG, logicalChannelIdentitySCG* and *logicalChannelConfigSCG,* included in *drb-ToAddModListSCG;*
   3>else (i.e. *drb-Type* is included and set to *scg* i.e. MCG to SCG):
      4>reconfigure the PDCP entity with the current SCG security configuration and in accordance with the *pdcp-Config,* if included in *drb-ToAddModListSCG;*
      4>reconfigure the MCG RLC entity or entities and the MCG DTCH logical channel to be an SCG RLC entity or entities and an SCG DTCH logical channel;
      4>reconfigure the SCG RLC entity or entities and/ or the SCG DTCH logical channel in accordance with the *rlc-ConfigSCG, logicalChannelIdentitySCG* and *logicalChannelConfigSCG,* if included in *drb-ToAddModListSCG;*

### 5.3.10.10 SCG reconfiguration

The UE shall:
1> if *makeBeforeBreakSCG* is configured:
   2> stop timer T313, if running;
   2> start timer T307 with the timer value set to t307, as included in the *mobilityControlInfoSCG;*
   2> start synchronising to the DL of the target PSCell, if needed;
   2> perform the remainder of this procedure including and following resetting MAC after the UE has stopped the uplink transmission/downlink reception with the source SCG cell(s);
   NOTE 0a: It is up to UE implementation when to stop the uplink transmission/ downlink reception with the source SCG cell(s) to initiate re-tuning for the connection to the target cell [16], if *makeBeforeBreakSCG* is configured.
1>if the received *scg-Configuration* is set to *release* or includes the *mobilityControlInfoSCG* (i.e. SCG release/ change):
   2>if *mobilityControlInfo* is not received (i.e. SCG release/ change without HO):
      3>reset SCG MAC, if configured;
      3> for each *drb-Identity* value that is part of the current UE configuration:
         4>if the DRB indicated by *drb-Identity* is an SCG DRB:
            5>re-establish the PDCP entity and the SCG RLC entity or entities;
         4>if the DRB indicated by *drb-Identity* is a split DRB:
            5>perform PDCP data recovery and re-establish the SCG RLC entity;
         4>if the DRB indicated by *drb-Identity* is an MCG DRB; and
         *4>drb-ToAddModListSCG* is received and includes the *drb-Identity* value, while for this entry *drb-Type* is included and set to *scg* (i.e. MCG to SCG):
            5>re-establish the PDCP entity and the MCG RLC entity or entities;
      3> configure lower layers to consider the SCG SCell(s), except for the PSCell, to be in deactivated state;
1>if the received *scg-Configuration* is set to *release*:
   2> release the entire SCG configuration, except for the DRB configuration (i.e. as configured by *drb-ToAddModListSCG*);
   2>if the current UE configuration includes one or more split or SCG DRBs and the received *RRCConnectionReconfiguration* message includes *radioResourceConfigDedicated* including *drb-ToAddModList:*
      3>reconfigure the SCG or split DRB by *drb-ToAddModList* as specified in 5.3.10.12;
   2>stop timer T313, if running;
   2>stop timer T307, if running;
1>else:
   2>if the received *scg-ConfigPartMCG* includes the *scg-Counter*:
      3>update the S-K_{eNB} key based on the K_{eNB} key and using the received *scg-Counter* value, as specified in TS 33.401 [32];
      3> derive the K_{UPenc} key associated with the *cipheringAlgorithmSCG* included in *mobilityControlInfoSCG* within the received *scg-ConfigPartSCG,* as specified in TS 33.401 [32];
      3> configure lower layers to apply the ciphering algorithm and the K_{UPenc} key;
   2>if the received *scg-ConfigPartSCG* includes the *radioResourceConfigDedicatedSCG*:
      3>reconfigure the dedicated radio resource configuration for the SCG as specified in 5.3.10.11;
   2>if the current UE configuration includes one or more split or SCG DRBs and the received *RRCConnectionReconfiguration* message includes *radioResourceConfigDedicated* including *drb-ToAddModList*:
      3>reconfigure the SCG or split DRB by *drb-ToAddModList* as specified in 5.3.10.12;
   2>if the received *scg-ConfigPartSCG* includes the *sCellToReleaseListSCG*:
      3>perform SCell release for the SCG as specified in 5.3.10.3a;
   2> if the received *scg-ConfigPartSCG* includes the *pSCellToAddMod*:
      3>perform PSCell addition or modification as specified in 5.3.10.3c;
      NOTE 0: This procedure is also used to release the PSCell e.g. PSCell change, SI change for the PSCell.
   2>if the received *scg-ConfigPartSCG* includes the *sCellToAddModListSCG*:
      3>perform SCell addition or modification as specified in 5.3.10.3b;
   2> configure lower layers in accordance with mobilityControlInfoSCG, if received;
   2>if *rach-SkipSCG* is configured:
      3> configure lower layers to apply the *rach-SkipSCG* for the target SCG, as specified in TS 36.213 [23] and TS 36.321 [6];
   2>if the received *scg-ConfigPartSCG* includes the *mobilityControlInfoSCG* (i.e. SCG change):
      3>resume all SCG DRBs and resume SCG transmission for split DRBs, if suspended;
      3> stop timer T313, if running;
      3> start timer T307 with the timer value set to *t307,* as included in the *mobilityControlInfoSCG,* if *makeBeforeBreakSCG* is not configured;
      3> start synchronising to the DL of the target PSCell;
      3> initiate the random access procedure on the PSCell, as specified in TS 36.321 [6], if *rach-SkipSCG* is not configured:
         NOTE 1: The UE is not required to determine the SFN of the target PSCell by acquiring system information from that cell before performing RACH access in the target PSCell.
      3>the procedure ends, except that the following actions are performed when MAC successfully completes the random access procedure on the PSCell or when MAC indicates the successful reception of a PDCCH transmission addressed to C-RNTI and if *rach-skipSCG* is configured:
         4> stop timer T307;
         4>release *ul-ConfigInfo,* if configured;
         4> apply the parts of the CQI reporting configuration, the scheduling request configuration and the sounding RS configuration that do not require the UE to know the SFN of the target PSCell, if any;
         4> apply the parts of the measurement and the radio resource configuration that require the UE to know the SFN of the target PSCell (e.g. periodic CQI reporting, scheduling request configuration, sounding RS configuration), if any, upon acquiring the SFN of the target PSCell;
         NOTE 2: Whenever the UE shall setup or reconfigure a configuration in accordance with a field that is received it applies the new configuration, except for the cases addressed by the above statements.

The L2 handling of a bearer type change for LTE-LTE DC is summarized in Table 1, below.

**Table 1: L2 Handling for LTE-LTE DC**

| Source/target bearer type | MCG bearer | | SCG bearer | MCG Split bearer | |
|---|---|---|---|---|---|
| MCG bearer | Legacy operation | | - PDCP reconfigured with new security configuration and reestablishment | - Start PDCP reordering | |
| | | | | - Establish SCG RLC entity | |
| | | | - RLC reestablishment | | |
| | | | - SCG MAC reset | | |
| SCG bearer | - PDCP reconfigured with new security configuration and reestablishment | | If SN change due to UE mobility: | Not supported | |
| | | | - PDCP reestablishment | | |
| | | | - RLC reestablishment | | |
| | | | - SCG MAC reset | | |
| | - RLC reestablishment | | | | |
| | - SCG MAC reset | | | | |
| MCG Split bearer | - PDCP recovery | Not supported | | | If SN change due to |
| | - SCG RLC Reestablishment | | | | UE mobility: |
| | | | | - PDCP reconfigured with new security configuration and reestablishment | |
| | - SCG MAC reset | | | | |
| | | | | | - SCG RLC Reestablishment |
| | | | | | - SCG MAC reset |

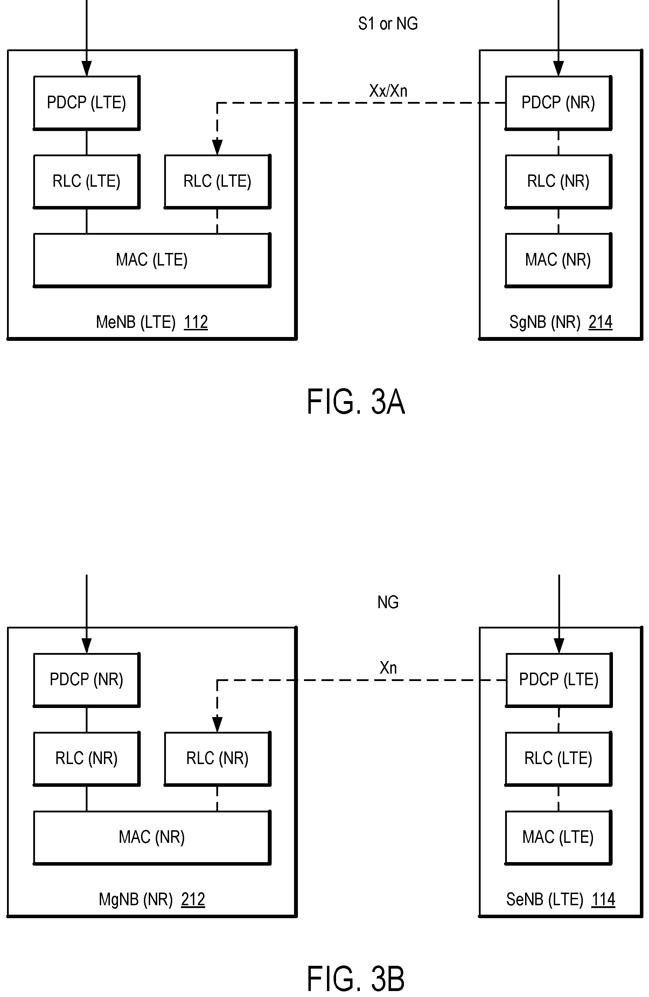

Referring now to FIG. 2A-2B and to FIG. 3A and FIG. 3B, diagrams of a Long-Term Evolution-New Radio (LTE-NR) split bearer arrangement via a master cell group (MCG), and via a secondary cell group (SCG), respectively, will be discussed. FIG. 2A shows a split bearer arrangement between an LTE MeNB 112 and an NR Secondary 5G NodeB (SgNB) 214, and FIG. 2B shows a split bear arrangement between an NR Master 5G NodeB (MgNB) 212 and an LTE SeNB 114, wherein the split is via the MCG. Similarly, FIG. 3A shows a split bearer arrangement between an LTE MeNB 112 and an NR SgNB 214, and FIG. 3B shows a split bearer arrangement between an MgNB 212 and an SeNB 114, wherein the split is via the SCG.

For LTE-NR DC (also known as EUTRAN-NR DC (EN-DC)), there are many different bearer types including an MCG bearer, an SCG bearer, an MCG split bearer and an SCG split bearer. It has been proposed to merge MCG split bearers and SCG split bearers into a single unified split bearer wherein the UE 122 only sees a split bearer type. In one or more embodiments, network 100 may be compliant with a Fifth Generation (5G) New Radio (NR) standard such that LTE-NR DC may be supported. In order to support LTE-NR DC, the following may be considered for L2 handling:
1. Change of the LTE PDCP entity to/from and NR PDCP entity
2. With a unified bearer wherein an SCG split bearer and MCG split bearer are considered as merely a split bearer, UE 122 may not be able to identify whether there is a need to perform re-establishment
3. A Secondary Node (SN) change with UE mobility may not result in a PDCP change and thus no security configuration change
4. Other than an SCG MAC reset, an MCG MAC reset also may be needed for an SCG split bearer with SN change with UE mobility and also a bearer type change between an MCG split bearer and an SCG split bearer

For (1), this will affect bearer type change of MCG to/from SCG and SCG split bearer. If the LTE PDCP entity is not the same as the NR PDCP entity, then there is a need to establish LTE/NR PDCP instead of reconfiguration during the bearer type change of MCG to/from SCG and SCG split bearer. Such establishment, however, will mean that the PDCP sequence number will be reset and thus some data may be lost in transit. In some embodiments, the NR PDCP entity may be used for all bearers in Evolved Universal Terrestrial Radio Access (E-UTRA) New Radio (NR) Dual Connectivity (DC), referred to as (EN-DC), case. If that is the case, then reconfiguration can still be used. However, this will mean that LTE side will have to implement NR PDCP for EN-DC and may have the same problem switching from LTE PDCP to NR PDCP and vice versa when EN-DC is configured/deconfigured. Alternatively, the UE 122 always will use the LTE PDCP entity, and the network 100 may conform to the restrictions of the LTE PDCP. For example, the SN length for DC is 15 or 18, and the PDCP Service Data Unit (SDU) size is 8088 bytes instead of 9 Kbytes.

For (2), with unified split bearer, the UE 122 only sees a split bearer type. The UE 122 does not know whether there is any change in PDCP and thus does not know whether the PDCP needs to be re-established (as well as LTE RLC needs to be re-established) because of an MCG split bearer to/from an SCG split bearer or and MCG/SCG split bearer to MCG/SCG split) bearer.

For (3), the UE 122 may not know whether a change of SN will involve the reestablishment of PDCP.

For (4), an SCG MAC reset may be performed for SN change due to UE 122 mobility. A bearer type change uses an SN change procedure to simplify the procedure of performing PDCP and RLC reestablishment. Other than SCG MAC reset for SN change, an SCG MAC reset also has to be performed for a bearer type change between an MCG split bearer and an SCG split bearer wherein the PDCP location is changed. The reason for the reset is to clear off MAC Protocol Data Unit (PDU) using and old security key configuration.

In one or more embodiments, in order to avoid loss of data, lossless reconfiguration may be performed from an LTE PDCP to an NR PDCP and *vice versa.* The UE 122 may receive an indication from the network 100 such as from EPC 110 whether to perform PDCP re-establishment or recovery and also whether a key change is needed. Furthermore, a MAC reset may be avoided as long as the PDCP PDU encoded with the old security key is discarded before reaching the PDCP entity that has been reconfigured. Alternatively, an indication may be provided on the PDCP header PDCP payload that is encoded with the old key or the new key so that PDCP entity either may discard the PDCP PDU if it is encoded with the old key or may decipher the PDCP PDU using the old key.

### PDCP Reconfiguration Between NR PDCP And LTE PDCP or Between NR PDCP where the MCG PDCP is also NR PDCP

In one or more embodiments, in order to avoid loss of data, reconfiguration between an LTE PDCP and an NR PDCP may be performed. Such PDCP reconfiguration will mean that the network has to ensure that a consistent SN length is used. If a PDCP SN has been increased to 18 bits, the network 100 will have to continue using the PDCP SN length of 18 bits even when on LTE DC.

The split data radio bearer (DRB) may be an MCG split DRB or an SCG split DRB on the network side. A bearer type change from an MCG bearer to an MCG split bearer may be performed without a key change or PDCP re-establishment, while a change of bearer type from an MCG bearer to an SCG split bearer will involve a key change and PDCP re-establishment. As a result, all of the different possibilities may be supported. A change from between an LTE PDCP and NR PDCP may support the following lossless reconfigurations.
1. With re-establishment and key change for MCG to SCG split bearer and vice versa
2. With data recovery and without key change for MCG split bearer to MCG bearer
3. Without key change or data recovery for MCG to MCG split bearer

As the UE 122 does not know what kind of lossless reconfigurations may be used, the kind of lossless reconfiguration may be indicated in the configuration when such reconfiguration occurs.

### MAC Reset Avoidance for MCG and SCG

In both MCG and SCG MAC reset, it not only affects the bearer of concern but also other bearers and Signaling Radio Bearers (SRBs) as well. The reason for the reset is to clear of the soft buffer and the hybrid automatic repeat request (HARQ) buffer of MAC PDUs using the old security key. To avoid SCG/MCG MAC reset to clear the buffer, the following approaches may be implemented in one or more embodiments.
1. Allocate a new logical channel identifier (LC-ID or LCID) for the DRB associated with PDCP re-establishment or bearer type change require SCG or MCG MAC reset. The MAC will discard the MAC PDU with unknown LC-ID.
2. Include a 1-bit toggling bit in the PDCP header of the PDCP PDU to indicate whether PDCP PDU is ciphered or integrity protected by previous or new key and PDCP entity discards PDCP PDU with indication of previous key or decipher PDCP PDU accordingly with old or new key depending on the indication.
   a. Instead of a 1-bit toggling bit, the PDCP header of the PDCP PDU an index to indicate the key being used. Upon receiving a PDCP PDU, the PDCP entity will decipher the PDCP payload according to the key indexed in the PDCP header or just discard it.
3. Allow the PDCP level integrity protected MAC PDU using the old security key to be sent to PDCP and leave it to PDCP to discard it due to failed integrity protection.

Approach 1 may be used if the associated RLC entity to the DRB is reset/reestablished. Upon RLC reset/reestablishment, all the state variables may be reset and the RLC SN may be initialized. The MAC PDU that is related to previous RLC SN may be discarded. Approach 2 may be used if the associated RLC entity to the DRB is not reset/reestablished. Since the RLC entity is not re-established, the existing state variables and SN continues. Then sending MAC PDU containing existing RLC SDU will not be an issue to RLC entity. Another approach for the MCG leg is to use an end marker in the PDCP header. In the MCG leg, the associated RLC entity to a DRB is LTE RLC, that is the MCG leg, and the RLC PDU may be delivered in order to PDCP entity. If the RLC entity is not reset/reestablished, the PDCP entity may receive the PDCP PDU in order. Upon receiving the end marker in the PDCP header of the PDCP PDU, the PDCP entity may stop using the old key and perform deciphering using the new key.

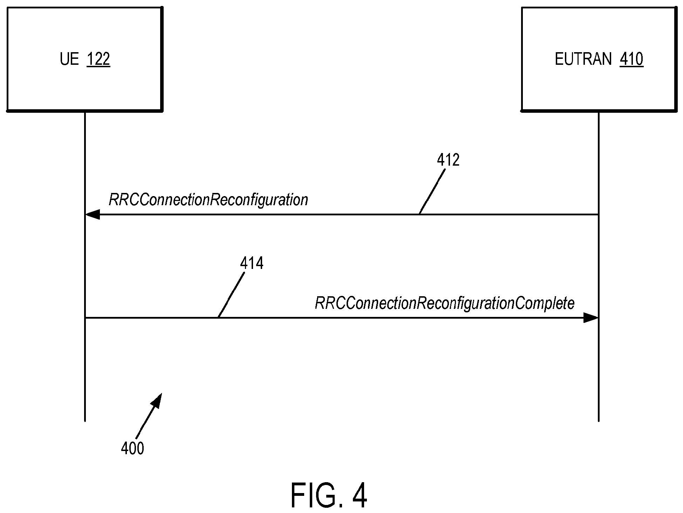

Referring now to FIG. 4 is a diagram of a radio resource control (RRC) connection reconfiguration procedure in accordance with one or more embodiments will be discussed. As discussed above, lossless reconfiguration may be performed from an LTE PDCP to an NR PDCP or vice versa. The UE 122 may receive an indication from the network 100 such as from Evolved Universal Terrestrial Radio Access Network (EUTRAN) 410 whether to perform PDCP re-establishment or recovery and also whether a key change is needed. Such an indication may be provided by EUTRAN 410 to UE 122 as part of a Radio Resource Control (RRC) connection reconfiguration procedure 400 as shown FIG. 4, for example as part of an *RRCConnectionReconfiguration* message 412 sent by EUTRAN 410 to UE 122. UE 122 may respond accordingly, for example with an *RRCConnectionReconfigurationComplete* message 414. It should be noted that RRC connection reconfiguration procedure 400 is merely one example for sending the indication whether to perform PDCP re-establishment or recovery and also whether a key change is needed to UE 122, wherein various other procedures may be utilized such as an RRC connection establishment procedure, or in a PDCP header, and the scope of the claimed subject matter is not limited in this respect.

In one or more embodiments, Layer 2 handling for a bearer type change may be found in Annex A of 3GPP TS 37.340 V15.1.0 (2018-03) as reflected in Table 2, below. Annex A provides for information an overview on L2 handling for bearer type change in EN-DC, with and without security key change (from KeNB to S-KgNB and from S-KgNB to KeNB), i.e., with and without a change of the termination point. It should be noted that MAC behavior depends on the solution selected by the network, for example MAC reset, change of LCID, and so on.

**Table 2: L2 handling for bearer type change with and without security key change**

| **Bearer type change from row to col** | **MCG** | | **Split** | | **SCG** | |
|---|---|---|---|---|---|---|
| | **no key change** | **with key change (K_{eNB} <-> S-K_{gNB})** | **no key change** | **with key change (K_{eNB} <-> S-K_{gNB})** | **no key change** | **with key change (K_{eNB} <-> S-K_{gNB})** |
| MCG | N/A | PDCP: Re-establish | PDCP: Reconfigure | PDCP: Re-establish | PDCP: Recovery | PDCP: Re-establish |
| | | | | | | MCG RLC: Re-est+release |
| | | | | MCG RLC: Re-establish MCG | MCG RLC: Re-est+release | |
| | | MCG RLC: Re-establish | MCG RLC: No action | | | |
| | | MCG MAC: See Note | MCG MAC: No action | | | MCG MAC: Reconfigure |
| | | | | MAC: See Note | MCG MAC: Reconfigure | |
| | | SCG RLC: No action | SCG RLC: Establish | | | |
| | | | | SCG RLC: Establish | SCG RLC: Establish | |
| | | SCG MAC: No action | SCG MAC: Reconfigure | | | SCG RLC: Establish |
| | | | | SCG MAC: Reconfigure | SCG MAC: Reconfigure | |
| | | | | | | SCG MAC: Reconfigure |
| Split | PDCP: Recovery | PDCP: Re-establish | N/A | PDCP: Re-establish | PDCP: Recovery | PDCP: Re-establish |
| | | | | | | MCG RLC: Re-est+release |
| | MCG RLC: No action | | | MCG RLC: Re-establish | MCG RLC: Re-est+release | |
| | | MCG RLC: Re-establish | | | | |
| | MCG MAC: No action | | | | | MCG MAC: Reconfigur e |
| | | MCG MAC: See Note | | MCG | MCG MAC: Reconfigure | |
| | | | | MAC: Reset | | |
| | SCG RLC: Release | SCG RLC: Release | | | | |
| | | | | SCG RLC: Re-establish | SCG RLC: No action | |
| | | | | | | SCG RLC: Re-establish |
| | SCG MAC: Reconfigure | SCG MAC: Reconfigure | | | SCG MAC: No action | |
| | | | | SCG MAC: See Note | | SCG MAC: See Note |
| SCG | PDCP: Recovery | PDCP: Re-establish | PDCP: Reconfigure | PDCP: Re-establish | N/A | PDCP: Re-establish |
| | MCG RLC: Establish | | | MCG RLC: Establish | | |
| | | | | | | MCG RLC: No action |
| | MCG MAC: Reconfigure | MCG RLC: Establish | MCG RLC: Establish | | | |
| | | | | MCG MAC: Reconfigure | | MCG MAC: No action |
| | | MCG MAC: Reconfigure | MCG MAC: Reconfigure | | | |
| | SCG RLC: Release | SCG RLC: Release | SCG RLC: No action | | | SCG RLC: Re-establish |
| | | | | SCG RLC: Re-establish | | |
| | SCG MAC: Reconfigure | SCG MAC: Reconfigure | SCG MAC: No action | | | |
| | | | | SCG MAC: See Note | | SCG MAC: See note |

It should be noted that in Table 2 above, MAC behavior depends on the solution selected by the network, e.g. MAC reset, change of LCID, etc. For the MAC reset case, the signaling is based on the change of the LCID via the release and add of DRB. The Stage-2 text is indicated in TS37.340 Annex A as reflected in Table 2 above. LCID values of 0 through 2 correspond to SRB ID values of 0 through 2, and LCID values of 3 through 10 correspond to DRB ID values of 1 through 8.

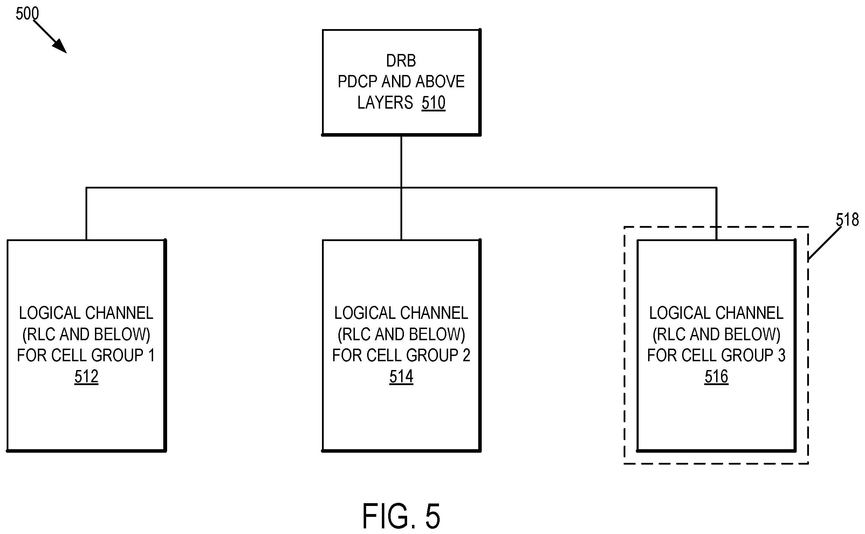

Referring now to FIG. 5, a diagram illustrating a change between a single connectivity bearer to multi-connectivity bearer by configuring or releasing one or more logical channels in accordance with one or more embodiments will be discussed. There are many different bearer types today for 5G NR: MCG bearer, SCG bearer, MCG split bearer and SCG split bearer. In one or more embodiments, MCG split bearers and SCG split bearers may be merged. Even with this, there are many different types of bearer type changes to be defined and the behavior for each.

Rather than model the bearer types, the bearer configuration 500 may be considered as a data radio bearer (DRB) 510 with Packet Data Convergence Protocol (PDCP) and above protocol layers as the main "bearer or DRB" with one more logical channels of RLC and below such as Logical Channel 512 (RLC and below) for Cell Group 1, Logical Channel 514 (RLC and below) for Cell Group 2, Logical Channel 516 (RLC and below) for Cell Group 3, and so on, as shown in FIG. 5.

The DRB part 510 (PDCP and above) does not have to be associated to any particular node such as a master node, secondary node, and so on. The logical channels are part of a cell group. Instead of changing from one "bearer type" to another "bearer type", a change may be achieved simply by configuring or releasing a logical channel associated with a DRB. For example, Logical Channel 516 may be configured or released as shown at configuration 518. Furthermore, the behavior for a protocol layer such as whether it is reset or re-established may be explicitly signaled rather than associated with bearer type change. A logical channel also may be suspended for any reason, such as cell is not Active, or a cell is released, while communication can continue over the other logical channels. The suspended logical channel configuration 518 may be later "revived" or cleared or transferred to another cell group.

The DRB 510 with PDCP part may be reconfigured and re-established when there is a change of node on the network such as when changing from an MCG based bearer (MCG or split) to an SCG based bearer or if there is a change in SN node. Alternatively, the DRB 510 with PDCP configuration may be released and added for such a change. The release/add procedure may keep the PDCP sequence number (SN) or not depending on whether lossless delivery is involved. It should be noted that a change from/to legacy networks will involve a change from/to the LTE PDCP and LTE bearer types which may be performed during a handover (HO).

One result from unifying the split bearers may be that from a RAN2 (UE) specification perspective, there is only one split bearer type, both from the control plane and the user plane perspective. Such an arrangement may simplify specifications for the UE 122 in that only one bearer type is considered, and the number of bearer type changes to be supported may be reduced. This result may be achieved when the bearer type is unified both from the control plane and the user plane perspective.

From the network perspective, both bearer types still exist in that the PDCP may be in a master node (MN) or in a secondary node (SN) for the split bearer, and the network specification may support both options. The PDCP configuration for a split bearer in may be carried in a separate container. In such an arrangement, the MN radio resource control (RRC) message will have two containers, one container for the secondary node (SN) configuration excluding the PDCP configuration for any split bearer, and another container carrying the PDCP configuration for the split bearer, irrespective of whether the PDCP is located in the master node (MN) or the secondary node (SN) on the network side.

From the perspective of the UE 122, the PDCP may be modeled as a separate entity not belonging to the MN stack or the SN stack. The received PDCP configuration may configure the PDCP layer which may be performed either by the MCG RRC entity or the SCG RRC entity within the UE 122 as a separate container. Such RRC modelling where the PDCP configuration is not directly associated with the MN RRC message or the SN RRC message conforms with the user plane modelling of a "neutral" PDCP entity.

From the network perspective, the PDCP configuration carried in the separate container may come from the node that has the PDCP entity. If there is an MCG split bearer, the PDCP configuration container may be provided by the MN, and if there is an SCG split bearer, the PDCP configuration may be provided by the SN. In such an approach, the PDCP configuration of the SN remains transparent to the MN.

In one or more embodiments, the security key for the unified split bearer cannot be automatically associated with the MN keys or SN keys based on the bearer type. Instead, the security key may be configured separately as part of the PDCP configuration. For example, the security key may be a key specifically assigned for each of the split bearers independently of the MN keys or SN keys.

For some bearer type changes, except for MCG to MCG split, the bearer type change may be accompanied with an SCG change. The UE 122 also performs the following actions for an SCG change. For an PDCP entity, PDCP is re-established for the case where the bearer type change is between MCG and SCG. In the case of MCG split to MCG, PDCP recovery may be performed involving PDCP retransmission. For an RLC entity, an MCG RLC entity may be re-established for MCG to SCG while an SCG RLC entity may be re-established for SCG to MCG and MCG split to MCG. An SCG MAC reset may be applied.

The SCG change procedure above also may be performed for secondary node (SN) change due to UE mobility. The above procedure summarized in Table 3, below.

**Table 3: Bearer Type Change Procedure**

| Source/target bearer type | MCG bearer | SCG bearer | Split bearer |
|---|---|---|---|
| MCG bearer | Legacy operation | -PDCP reconfigured with new security configuration and reestablishment | -Start PDCP reordering |
| | | | -Establish SCG RLC entity |
| | | -RLC reestablishment | |
| | | -SCG MAC reset | |
| SCG bearer | -PDCP reconfigured with new security configuration and reestablishment | If SN change due to UE mobility: | Not supported |
| | | -PDCP reestablishment | |
| | | -RLC reestablishment | |
| | -RLC reestablishment | -SCG MAC reset | |
| | -SCG MAC reset | | |
| Split bearer | -PDCP recovery SCG RLC reestablishment | Not supported | If SN change due to UE mobility: |
| | | | -PDCP reconfigured with new security configuration and reestablishment |
| | -SCG MAC reset | | |
| | | | -SCG RLC reestablishment |
| | | | -SCG MAC reset |

From the above Table 3, for bearer type change from SCG split bearer to SCG bearer or SN change for SCG split bearer, the change also affects the LTE (MCG) RLC entity associated to the SCG split bearer. In this case, the LTE (MCG) RLC entity has to be re-established to deliver the buffered RLC service data units (SDUs) to PDCP before the LTE (MCG) RLC entity is released during the SCG split bearer to SCG bearer change or when the PDCP entity is re-established, for example during a secondary node (SN) change for the SCG split bearer, during bearer type change between MCG and SCG bearer, and so on.

For bearer type change and SN change in Evolved Universal Terrestrial Radio Access (E-UTRA) New Radio (NR) Dual Connectivity (DC) (EN-DC), the following factors also may be considered.

A change of an LTE RLC entity to/from an NR RLC entity may occur because of a bearer type change between the MCG bearer and SCG bearer. The LTE RLC has a reordering function and hence buffers out of order RLC SDUs while the NR RLC delivers all RLC SDUs to PDCP immediately without reordering or buffering. Hence, if the change is from an LTE RLC entity to an NR RLC entity, for example MCG to SCG, then re-establishment needs to be performed on the LTE RLC entity to ensure that any RLC SDU stored in the reordering queue may be push to the PDCP layer. The LTE RLC then may be released, and an NR RLC entity established. If the change is from an NR RLC entity to an LTE RLC entity, the NR RLC entity may be released without re-establishment, and the LTE RLC entity may be established. No reconfiguration of an LTE RLC entity to/from NR RLC entity is needed. Instead, the RLC entities may be released and established between an MCG and SCG bearer type change.

There is no RLC reordering in NR and thus there is no need to perform RLC re-establishment in the case the NR RLC entity is to be released. This is applicable for bearer type change of SCG and SCG/MCG split to MCG. In these bearer type changes, there is no need to perform SCG RLC entity re-establishment before the RLC release since there is buffering or no reordering function in NR RLC. Based on the above, an SCG RLC entity does not need to be re-established for a bearer type change not involving mobility procedure for example an SN change.

### MAC handling during bearer type change

In LTE, an SCG MAC reset is performed for a sequence number (SN) change due to UE mobility. Bearer type change uses SN change procedure to simplify the procedure of performing PDCP and RLC reestablishment. Other than SCG MAC reset for SN change, SCG MAC reset also may be performed for bearer type change between MCG split bearer and SCG split bearer where the PDCP location is changed. The reason for the reset is to clear off MAC PDU using old security key configuration.

Furthermore, in NR, there is also a need to reset MCG MAC for SCG split bearer if PDCP is re-established with security key change, for example due to SN change with UE mobility and bearer type change between MCG split bearer and SCG split bearer. Both MCG and SCG MAC reset not only affects the bearer of concern with key change, for example due to SN change, but also other bearers and SRB as well which are not affected by the key change.

If the soft buffer and HARQ buffer of MAC PDUs using the old security key is not cleared, MAC will attempt delivery to the new RLC and PDCP entities. To avoid SCG/MCG MAC reset to clear the buffer, the following approaches may be implemented.
1. Allocate a new LC-ID for the DRB associated with PDCP re-establishment. The MAC will discard the MAC PDU with the old (now unknown) LC-ID.
2. Include an index in the PDCP header of the PDCP PDU to indicate whether PDCP PDU is ciphered or integrity protected by previous or new key. PDCP entity discards PDCP PDU with indication of previous key or decipher PDCP PDU accordingly with old or new key depending on the indication. Instead of an index, a 1-bit toggling bit to indicate the key change can be used. Upon receiving a PDCP PDU, the PDCP entity will decipher the PDCP payload according to the key indicated in the PDCP header or just discard it.
3. Allow the PDCP level integrity protected MAC PDU using the old security key to be sent to PDCP and leave it to PDCP to discard it due to failed integrity protection.

Approach 1 above may be used if the associated RLC entity to the DRB is reset/re-established, and it can also be used if the associated RLC entity is not re- established. Upon RLC reset/reestablishment, all the state variables will be reset, and the RLC SN will be initialized. The MAC PDU that is related to RLC PDU with previous RLC SN may be discarded. One concern could be that there are not sufficient LCIDs for UL/DL logical channel on the LTE side. Currently there are eight LC-IDs to be associated with DRB. This will allow at most four split bearers which is sufficient.

Approach 2 above may be used if the associated RLC entity to the DRB is not reset/re-established. Since the RLC entity is not re-established, the existing state variables and SN continues. Then sending MAC PDU containing existing RLC SDU will not be an issue to the RLC entity.

Approach 3 above is possible for an NR PDCP. If an LTE PDCP is used for a split bearer, integrity protection for DRB is not supported. Furthermore, using an integrity check failure to discard PDCP PDU may mean deviation from the normal integrity check failure and trigger recovery procedures.

Comparing between Approach 1 and 2, Approach 1 may be used regardless of whether RLC entity is re-established or not. Therefore, allocating a new LC-ID during bearer type change or SN change for the DRB associated with PDCP re-establishment may be implemented. The MAC will discard the MAC PDU with old (unknown) LC-ID.

It should be noted that the following still applies to Evolved Universal Terrestrial Radio Access (E-UTRA) New Radio (NR) Dual Connectivity (DC) (EN-DC). PDCP should be re-established whenever there is a change of the PDCP location, for example an MCG (split) to SCG (split) and SN change with PDCP location change. When a split path is released, for example an SCG leg of an MCG split bearer is released or an MCG leg of an SCG split bearer is released, the PDCP entity performs PDCP recovery.

In one or more embodiments, the following L2 handling may be applied to EN-DC. PDCP should be re-established whenever there is a change of the PDCP location, for example an MCG (split) to an SCG (split) and SN change with PDCP location change. When a split path is released, for example an SCG leg of an MCG split bearer is released or an MCG leg of an SCG split bearer is released, the PDCP entity performs PDCP recovery.

### Further considerations for EN-DC

For bearer type change and SN change in EN DC, the following factors may be considered.
1. Change of LTE PDCP entity to/from NR PDCP entity
2. With unified bearer (SCG (split) bearer and MCG split bearer are considered split bearer), the UE 122 may not be able to identify whether there is a need to perform re- establishment, for example for an MCG to split, is it an MCG to an MCG split or an MCG to an SCG split, and so on
3. SN change with UE mobility may not result in PDCP change and thus no security configuration change

Factor 1 above may occur in a number of scenarios.
a) HO between legacy LTE and EN-DC/NR: Lossless HO is expected to be needed for HOs within EPC. This also involves a key change and can be supported by the combination of PDCP re-configuration between LTE and NR PDCP and re-establishment with SN continuity.
b) DRB Bearer type change from MCG bearer to split or SCG bearer: This can be avoided by the DRB was not originally set up in this cell as an NR PDCP DRB.
c) SRB1 always may be set up as an LTE PDCP during connection establishment as UE capability is only known to the network after establishment of SRB1. Subsequent reconfigurations to a split SRB using NR PDCP may involve a change from an LTE PDCP to an NR PDCP. This is not needed if and LTE PDCP is used for split SRB. If it is needed, it can be addressed using intra-cell HO if such a change is needed in the cell with which the UE 122 established the connection.

For Factor 2 above, with a unified bearer, the UE 122 only sees a split bearer type. The UE 122 does not know whether there is any change from an MCG split to an SCG split and hence if there is change in PDCP and whether the PDCP needs to be re-established. An explicit indication may be provided to indicate whether PDCP re-establishment should be performed. Such an indication also may be provided for Factor 3 above for SN change with UE mobility.

With a unified bearer, the UE 122 does not know whether there was a change in PDCP on the network side and whether to perform PDCP re-establishment, for example for an MCG split to an SCG split, SN change with PDCP change. Furthermore, with a unified bearer, the UE 122 performs PDCP re-establishment only when it is explicitly indicated, particularly for a reconfiguration from split bearer to split bearer or for an SN change with PDCP location change.

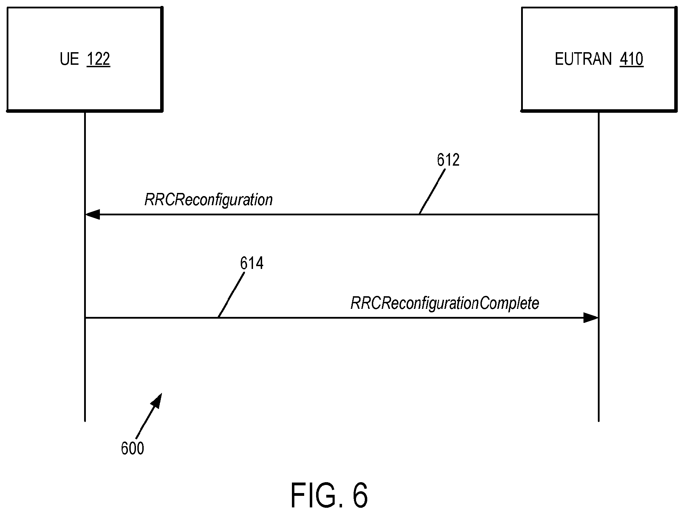

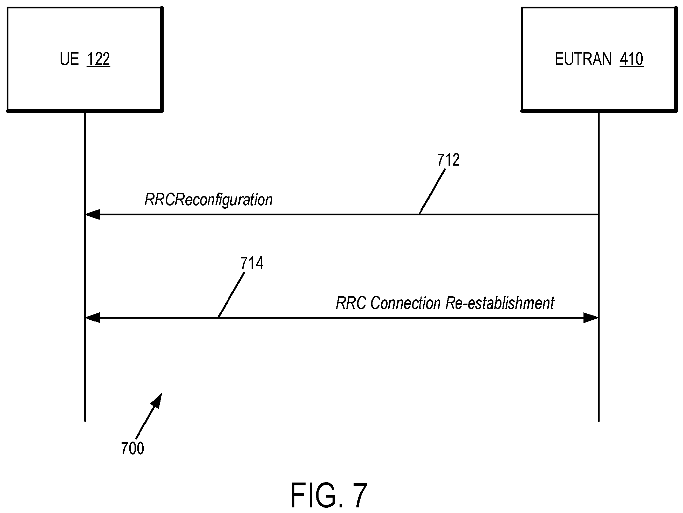

Referring now to FIG. 6 and FIG. 7, diagrams of a radio resource control (RRC) reconfiguration procedure illustrating a reconfiguration complete process and an RRC connection re-establishment process, respectively, in accordance with one or more embodiments will be discussed. An RRC reconfiguration, successful, process 600 is shown in FIG. 6 in which the network or EUTRAN 410 sends an *RRCReconfiguration* message 612 to the UE 122, and if successful then UE 122 send an *RRCReconfiguration* message 614 to the EUTRAN 410. An RRC reconfiguration, failure, process 700 is shown in FIG. 7 in which the network or EUTRAN 410 sends an RRCReconfiguration message 712 to the UE 122. In the event of an RRC Reconfiguration failure, the UE 122 and the EUTRAN engage in an RRC Connection Re-establishment procedure 714. The purpose of procedure shown in FIG. 6 and FIG. 7 is to modify an RRC connection, for example to establish, modify, or release RBs, to perform reconfiguration with sync, to setup, modify, or release measurements, and/or to add, modify, or release SCells and cell groups. As part of these procedure, non-access stratum NAS dedicated information may be transferred from the network or EUTRAN 410 to the UE 122. In EN-DC, signaling radio bearer 3 (SRB3) may be used to configure measurements, MAC, RLC, PDCP, physical layer and RLF timers and constants.

In one or more embodiments, *RRCReconfiguration* message 612 and/or *RRCReconfiguration* message 712 may include the information element (IE) RadioBearerConfig. The IE *RadioBearerConfig* is used to add, modify and release signaling and/or data radio bearers. Specifically, this IE *RadioBearerConfig* carries the parameters for Packet Data Convergence Protocol (PDCP) and, if applicable, Service Data Adaptation Protocol (SDAP) entities for the radio bearers.

The behavior of the UE 122 upon receiving an RRCReconfiguration message may be as follows as described in Section 5.3.5.4 of 3GPP TS 38.331.

### 5.3.5.3 Reception of an RRCReconfiguration by the UE

The UE shall perform the following actions upon reception of the *RRCReconfiguration*:
1>if the RRCReconfiguration includes the secondaryCellGroup:
   2> perform the cell group configuration for the SCG according to 5.3.5.5;
1>if the RRCReconfiguration message contains the radioBearerConfig:
   2> perform the radio bearer configuration according to 5.3.5.6;
1>if the *RRCReconfiguration* message includes the *measConfig*:
   2> perform the measurement configuration procedure as specified in 5.5.2;
1> if the UE is configured with E-UTRA *nr-SecondaryCellGroupConfig* (MCG is E-UTRA):
   2> if *RRCReconfiguration* was received via SRB1:
      3> construct *RRCReconfigurationComplete* message and submit it via the EUTRA MCG embedded in E-UTRA RRC message *RRCConnectionReconfigurationComplete* as specified in TS 36.331 [10];
      3> if reconfigurationWithSync was included in spCellConfig of an SCG:
         4> initiate the random access procedure on the SpCell, as specified in TS 38.321 [3];
   2> else (*RRCReconfiguration* was received via SRB3):
      3> submit the *RRCReconfigurationComplete* message via SRB3 to lower layers for transmission using the new configuration;
NOTE: In the case of SRB1, the random access is triggered by RRC layer itself as there is not necessarily other UL transmission. In the case of SRB3, the random access is triggered by the MAC layer due to arrival of *RRCReconfigurationComplete.*

The behavior of the UE 122 upon receiving based on a received *RadioBearerConfig* IE may be as follows as described in 3GPP TS 38.331.

### 5.3.5.6 Radio Bearer configuration

### 5.3.5.6.1 General

The UE shall perform the following actions based on a received *RadioBearerConfig* IE:
1>if the *RadioBearerConfig* includes the *srb3-ToRelease* and set to true:
   2> perform the SRB release as specified in 5.3.5.6.2;
1>if the RadioBearerConfig includes the srb-ToAddModList:
   2> perform the SRB addition or reconfiguration as specified in 5.3.5.6.3;
1>if the RadioBearerConfig includes the drb-ToReleaseList:
   2> perform DRB release as specified in 5.3.5.6.4;
1>if the RadioBearerConfig includes the drb-ToAddModList:
   2> perform DRB addition or reconfiguration as specified in 5.3.5.6.5.

### 5.3.5.6.5 DRB addition/modification

The UE shall:
1>for each *drb-Identity* value included in the *drb-ToAddModList* that is not part of the current UE configuration (DRB establishment including the case when full configuration option is used):
   2> establish a PDCP entity and configure it in accordance with the received *pdcp-Config*;
   2> configure the PDCP entity with the security algorithms according to *securityConfig* and apply the keys (K_{UPenc}) associated with the K_{eNB}/S-K_{gNB} as indicated in *keyToUse*;
   2>if the DRB was configured with the same *eps-BearerIdentity* either by NR or E-UTRA prior to receiving this reconfiguration:
      3> associate the established DRB with the corresponding *eps-BearerIdentity;*
   2> else:
      3>indicate the establishment of the DRB(s) and the *eps-BearerIdentity* of the established DRB(s) to upper layers;
1>for each *drb-Identity* value included in the *drb-ToAddModList* that is part of the current UE configuration:
   2>if reestablishPDCP is set:
      3> configure the PDCP entity of this *RadioBearerConfig* to apply the ciphering algorithm and K_{UPenc} key associated with the KeNB/S-KgNB as indicated in *keyToUse,* i.e. the ciphering configuration shall be applied to all subsequent PDCP PDUs received and sent by the UE;
      3>re-establish the PDCP entity of this DRB as specified in 38.323 [5], section 5.1.2;
   2> else, if *recoverPDCP* is set:
      3>trigger the PDCP entity of this DRB to perform data recovery as specified in 38.323;
   2>if the *pdcp-Config* is included:
      3> reconfigure the PDCP entity in accordance with the received *pdcp-Config.*

NOTE 1: Removal and addition of the same *drb-Identity* in a single *radioResourceConfig* is not supported. In case *drb-Identity* is removed and added due to reconfiguration with sync or re-establishment with the full configuration option, the network can use the same value of *drb-Identity.*
NOTE 2: When determining whether a drb-Identity value is part of the current UE configuration, the UE does not distinguish which *RadioBearerConfig* and *DRB-ToAddModList* that DRB was originally configured in. To re-associate a DRB with a different key (KeNB to S-KeNB or vice versa), the network provides the *drb-Identity* value in the (target) *drb-ToAddModList* and sets the *reestablishPDCP* flag. The network does not list the *drb-Identity* in the (source) *drb-ToReleaseList.*
NOTE 3: When setting the *reestablishPDCP* flag for a radio bearer, the network ensures that the RLC receiver entities do not deliver old PDCP PDUs to the re-established PDCP entity. It does that e.g. by triggering a reconfiguration with sync of the cell group hosting the old RLC entity or by releasing the old RLC entity.
NOTE 4: In this specification, UE configuration refers to the parameters configured by NR RRC unless otherwise stated.

### 5.3.5.7 Security key update

Upon reception of *sk-Counter* as specified in TS 36.331 [10] the UE shall:
1> update the S-K_{gNB} key based on the K_{eNB} key and using the received *sk-Counter* value, as specified in TS 33.501 [11];
1> derive K_{RRCenc} and K_{UPenc} key as specified in TS 33.501 [11];
1> derive the K_{RRCint} and K_{UPint} key as specified in TS 33.501 [11].

The explicit signaling for PDCP reestablishment and recovery may be performed as described in the Radio Resource Control (RRC) signaling NR PDCP configuration portions of 3GPP TS 38.331 under *RadioBearerConfig* as underlined below. The explicit signaling on the key to use is also underlined below.

### - RadioBearerConfig

The IE *RadioBearerConfig* is used to add, modify and release signalling and/or data radio bearers. Specifically, this IE carries the parameters for PDCP and, if applicable, SDAP entities for the radio bearers.

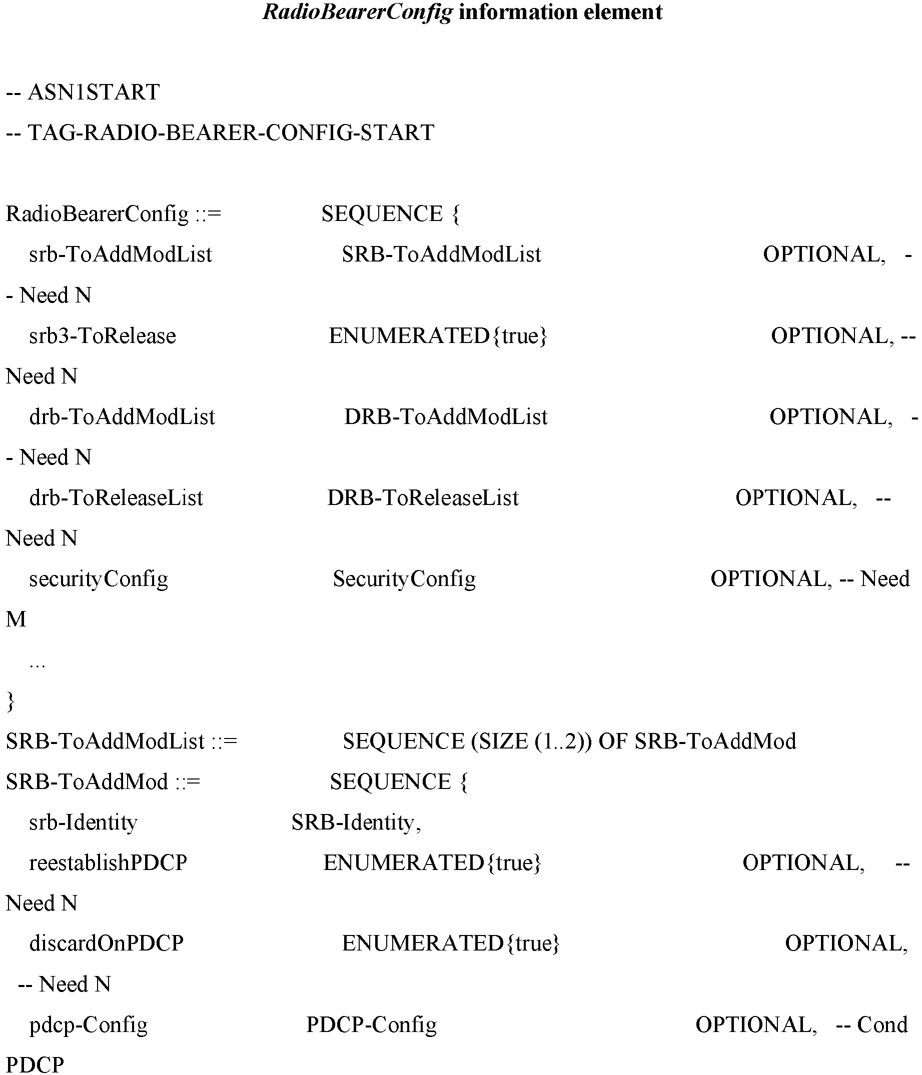

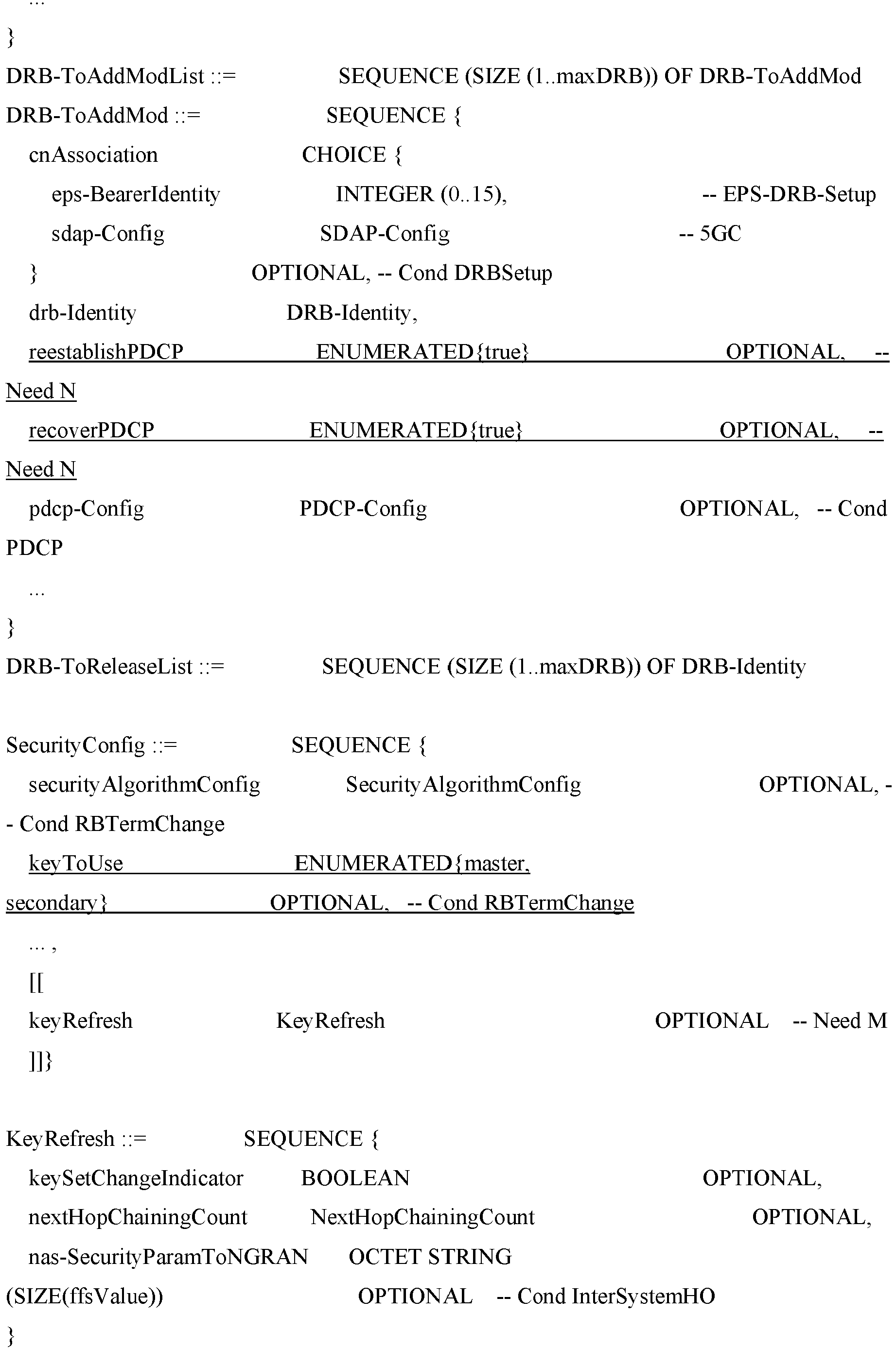

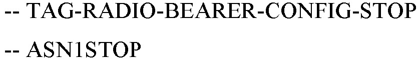

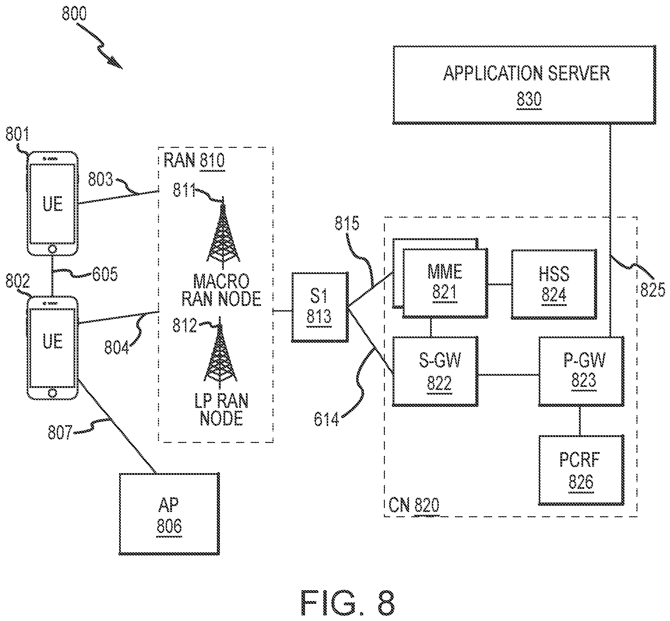

FIG. 8 illustrates an architecture of a system 800 of a network in accordance with some embodiments. The system 800 is shown to include a user equipment (UE) 801 and a UE 802. The UEs 801 and 802 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 801 and 802 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 801 and 802 may be configured to connect, e.g., communicatively couple, with a radio access network (RAN) 810 - the RAN 810 may be, for example, an Evolved Universal Mobile Telecommunications System (UMTS) Terrestrial Radio Access Network (E-UTRAN), a NextGen RAN (NG RAN), or some other type of RAN. The UEs 801 and 802 utilize connections 803 and 804, respectively, each of which comprises a physical communications interface or layer (discussed in further detail below); in this example, the connections 803 and 804 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 801 and 802 may further directly exchange communication data via a ProSe interface 805. The ProSe interface 805 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 802 is shown to be configured to access an access point (AP) 806 via connection 807. The connection 807 can comprise a local wireless connection, such as a connection consistent with any IEEE 802.11 protocol, wherein the AP 806 would comprise a wireless fidelity (WiFi^{®}) router. In this example, the AP 806 is shown to be connected to the Internet without connecting to the core network of the wireless system (described in further detail below).

The RAN 810 can include one or more access nodes that enable the connections 803 and 804. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 810 may include one or more RAN nodes for providing macrocells, e.g., macro RAN node 811, and one or more RAN nodes for providing femtocells or picocells (e.g., cells having smaller coverage areas, smaller user capacity, or higher bandwidth compared to macrocells), e.g., low power (LP) RAN node 812.

Any of the RAN nodes 811 and 812 can terminate the air interface protocol and can be the first point of contact for the UEs 801 and 802. In some embodiments, any of the RAN nodes 811 and 812 can fulfill various logical functions for the RAN 810 including, but not limited to, radio network controller (RNC) functions such as radio bearer management, uplink and downlink dynamic radio resource management and data packet scheduling, and mobility management.

In accordance with some embodiments, the UEs 801 and 802 can be configured to communicate using Orthogonal Frequency-Division Multiplexing (OFDM) communication signals with each other or with any of the RAN nodes 811 and 812 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 811 and 812 to the UEs 801 and 802, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 801 and 802. The physical downlink control channel (PDCCH) may carry information about the transport format and resource allocations related to the PDSCH channel, among other things. It may also inform the UEs 801 and 802 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 811 and 812 based on channel quality information fed back from any of the UEs 801 and 802. The downlink resource assignment information may be sent on the PDCCH used for (e.g., assigned to) each of the UEs 801 and 802.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 810 is shown to be communicatively coupled to a core network (CN) 820 -via an S1 interface 813. In embodiments, the CN 820 may be an evolved packet core (EPC) network, a NextGen Packet Core (NPC) network, or some other type of CN. In this embodiment the S1 interface 813 is split into two parts: the S1-U interface 814, which carries traffic data between the RAN nodes 811 and 812 and the serving gateway (S-GW) 822, and the S1-mobility management entity (MME) interface 815, which is a signaling interface between the RAN nodes 811 and 812 and MMEs 821.

In this embodiment, the CN 820 comprises the MMEs 821, the S-GW 822, the Packet Data Network (PDN) Gateway (P-GW) 823, and a home subscriber server (HSS) 824. The MMEs 821 may be similar in function to the control plane of legacy Serving General Packet Radio Service (GPRS) Support Nodes (SGSN). The MMEs 821 may manage mobility aspects in access such as gateway selection and tracking area list management. The HSS 824 may comprise a database for network users, including subscription-related information to support the network entities' handling of communication sessions. The CN 820 may comprise one or several HSSs 824, depending on the number of mobile subscribers, on the capacity of the equipment, on the organization of the network, etc. For example, the HSS 824 can provide support for routing/roaming, authentication, authorization, naming/addressing resolution, location dependencies, etc.

The S-GW 822 may terminate the S1 interface 813 towards the RAN 810, and routes data packets between the RAN 810 and the CN 820. In addition, the S-GW 822 may be a local mobility anchor point for inter-RAN node handovers and also may provide an anchor for inter-3GPP mobility. Other responsibilities may include lawful intercept, charging, and some policy enforcement.

The P-GW 823 may terminate an SGi interface toward a PDN. The P-GW 823 may route data packets between the EPC network 823 and external networks such as a network including the application server 830 (alternatively referred to as application function (AF)) via an Internet Protocol (IP) interface 825. Generally, the application server 830 may be an element offering applications that use IP bearer resources with the core network (e.g., UMTS Packet Services (PS) domain, LTE PS data services, etc.). In this embodiment, the P-GW 823 is shown to be communicatively coupled to an application server 830 via an IP communications interface 825. The application server 830 can also be configured to support one or more communication services (e.g., Voice-over-Internet Protocol (VoIP) sessions, PTT sessions, group communication sessions, social networking services, etc.) for the UEs 801 and 802 via the CN 820.

The P-GW 823 may further be a node for policy enforcement and charging data collection. Policy and Charging Enforcement Function (PCRF) 826 is the policy and charging control element of the CN 820. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 826 may be communicatively coupled to the application server 830 via the P-GW 823. The application server 830 may signal the PCRF 826 to indicate a new service flow and select the appropriate Quality of Service (QoS) and charging parameters. The PCRF 826 may provision this rule into a Policy and Charging Enforcement Function (PCEF) (not shown) with the appropriate traffic flow template (TFT) and QoS class of identifier (QCI), which commences the QoS and charging as specified by the application server 830.

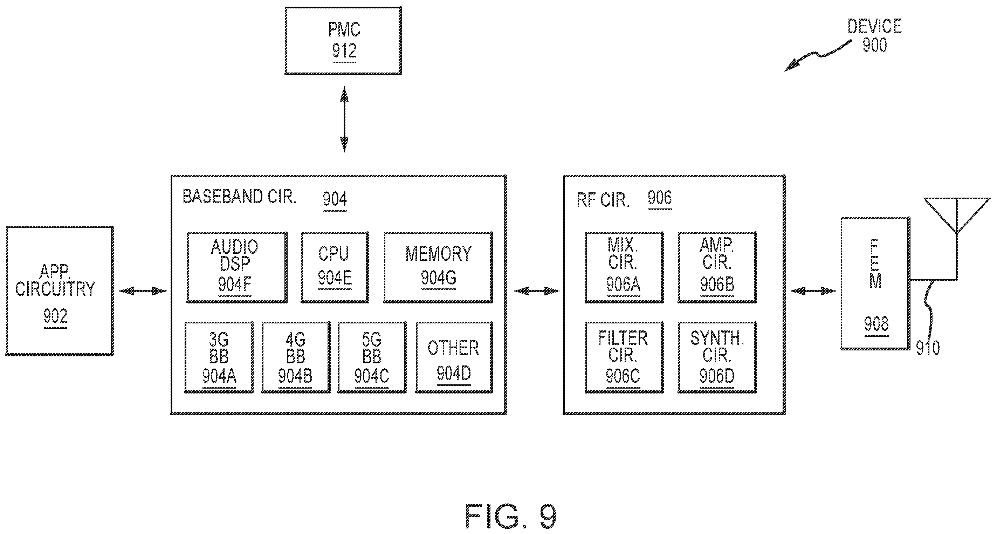

FIG. 9 illustrates example components of a device 900 in accordance with some embodiments. In some embodiments, the device 900 may include application circuitry 902, baseband circuitry 904, Radio Frequency (RF) circuitry 906, front-end module (FEM) circuitry 908, one or more antennas 910, and power management circuitry (PMC) 912 coupled together at least as shown. The components of the illustrated device 900 may be included in a UE or a RAN node. In some embodiments, the device 900 may include less elements (e.g., a RAN node may not utilize application circuitry 902, and instead include a processor/controller to process IP data received from an EPC). In some embodiments, the device 900 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 902 may include one or more application processors. For example, the application circuitry 902 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 900. In some embodiments, processors of application circuitry 902 may process IP data packets received from an EPC.

The baseband circuitry 904 may include circuitry such as, but not limited to, one or more single-core or multi-core processors. The baseband circuitry 904 may include one or more baseband processors or control logic to process baseband signals received from a receive signal path of the RF circuitry 906 and to generate baseband signals for a transmit signal path of the RF circuitry 906. Baseband processing circuity 904 may interface with the application circuitry 902 for generation and processing of the baseband signals and for controlling operations of the RF circuitry 906. For example, in some embodiments, the baseband circuitry 904 may include a third generation (3G) baseband processor 904A, a fourth generation (4G) baseband processor 904B, a fifth generation (5G) baseband processor 904C, or other baseband processor(s) 904D for other existing generations, generations in development or to be developed in the future (e.g., second generation (2G), sixth generation (6G), etc.). The baseband circuitry 904 (e.g., one or more of baseband processors 904A-D) may handle various radio control functions that enable communication with one or more radio networks via the RF circuitry 906. In other embodiments, some or all of the functionality of baseband processors 904A-D may be included in modules stored in the memory 904G and executed via a Central Processing Unit (CPU) 904E. The radio control functions may include, but are not limited to, signal modulation/demodulation, encoding/decoding, radio frequency shifting, etc. In some embodiments, modulation/demodulation circuitry of the baseband circuitry 904 may include Fast-Fourier Transform (FFT), precoding, or constellation mapping/demapping functionality. In some embodiments, encoding/decoding circuitry of the baseband circuitry 904 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 904 may include one or more audio digital signal processor(s) (DSP) 904F. The audio DSP(s) 904F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 904 and the application circuitry 902 may be implemented together such as, for example, on a system on a chip (SOC).

In some embodiments, the baseband circuitry 904 may provide for communication compatible with one or more radio technologies. For example, in some embodiments, the baseband circuitry 904 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 904 is configured to support radio communications of more than one wireless protocol may be referred to as multi-mode baseband circuitry.

RF circuitry 906 may enable communication with wireless networks using modulated electromagnetic radiation through a non-solid medium. In various embodiments, the RF circuitry 906 may include switches, filters, amplifiers, etc. to facilitate the communication with the wireless network. RF circuitry 906 may include a receive signal path which may include circuitry to downconvert RF signals received from the FEM circuitry 908 and provide baseband signals to the baseband circuitry 904. RF circuitry 906 may also include a transmit signal path which may include circuitry to up-convert baseband signals provided by the baseband circuitry 904 and provide RF output signals to the FEM circuitry 908 for transmission.

In some embodiments, the receive signal path of the RF circuitry 906 may include mixer circuitry 906a, amplifier circuitry 906b and filter circuitry 906c. In some embodiments, the transmit signal path of the RF circuitry 906 may include filter circuitry 906c and mixer circuitry 906a. RF circuitry 906 may also include synthesizer circuitry 906d for synthesizing a frequency for use by the mixer circuitry 906a of the receive signal path and the transmit signal path. In some embodiments, the mixer circuitry 906a of the receive signal path may be configured to downconvert RF signals received from the FEM circuitry 908 based on the synthesized frequency provided by synthesizer circuitry 906d. The amplifier circuitry 906b may be configured to amplify the down-converted signals and the filter circuitry 906c may be a low-pass filter (LPF) or bandpass filter (BPF) configured to remove unwanted signals from the down-converted signals to generate output baseband signals. Output baseband signals may be provided to the baseband circuitry 904 for further processing. In some embodiments, the output baseband signals may be zero-frequency baseband signals, although this is not a requirement. In some embodiments, mixer circuitry 906a of the receive signal path may comprise passive mixers, although the scope of the embodiments is not limited in this respect.

In some embodiments, the mixer circuitry 906a of the transmit signal path may be configured to up-convert input baseband signals based on the synthesized frequency provided by the synthesizer circuitry 906d to generate RF output signals for the FEM circuitry 908. The baseband signals may be provided by the baseband circuitry 904 and may be filtered by filter circuitry 906c.

In some embodiments, the mixer circuitry 906a of the receive signal path and the mixer circuitry 906a of the transmit signal path may include two or more mixers and may be arranged for quadrature downconversion and upconversion, respectively. In some embodiments, the mixer circuitry 906a of the receive signal path and the mixer circuitry 906a of the transmit signal path may include two or more mixers and may be arranged for image rejection (e.g., Hartley image rejection). In some embodiments, the mixer circuitry 906a of the receive signal path and the mixer circuitry 906a may be arranged for direct downconversion and direct upconversion, respectively. In some embodiments, the mixer circuitry 906a of the receive signal path and the mixer circuitry 906a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 906 may include analog-to-digital converter (ADC) and digital-to-analog converter (DAC) circuitry and the baseband circuitry 904 may include a digital baseband interface to communicate with the RF circuitry 906. In some dual-mode embodiments, a separate radio IC circuitry may be provided for processing signals for each spectrum, although the scope of the embodiments is not limited in this respect.

In some embodiments, the synthesizer circuitry 906d may be a fractional-N synthesizer or a fractional N/N+1 synthesizer, although the scope of the embodiments is not limited in this respect as other types of frequency synthesizers may be suitable. For example, synthesizer circuitry 906d may be a delta-sigma synthesizer, a frequency multiplier, or a synthesizer comprising a phase-locked loop with a frequency divider.

The synthesizer circuitry 906d may be configured to synthesize an output frequency for use by the mixer circuitry 906a of the RF circuitry 906 based on a frequency input and a divider control input. In some embodiments, the synthesizer circuitry 906d may be a fractional N/N+1 synthesizer.

In some embodiments, frequency input may be provided by a voltage-controlled oscillator (VCO), although that is not a requirement. Divider control input may be provided by either the baseband circuitry 904 or the applications processor 902 depending on the desired output frequency. In some embodiments, a divider control input (e.g., N) may be determined from a look-up table based on a channel indicated by the applications processor 902.

Synthesizer circuitry 906d of the RF circuitry 906 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 906d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 906 may include an IQ/polar converter.

FEM circuitry 908 may include a receive signal path which may include circuitry configured to operate on RF signals received from one or more antennas 910, amplify the received signals and provide the amplified versions of the received signals to the RF circuitry 906 for further processing. FEM circuitry 908 may also include a transmit signal path which may include circuitry configured to amplify signals for transmission provided by the RF circuitry 906 for transmission by one or more of the one or more antennas 910. In various embodiments, the amplification through the transmit or receive signal paths may be done solely in the RF circuitry 906, solely in the FEM 908, or in both the RF circuitry 906 and the FEM 908.

In some embodiments, the FEM circuitry 908 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 906). The transmit signal path of the FEM circuitry 908 may include a power amplifier (PA) to amplify input RF signals (e.g., provided by RF circuitry 906), and one or more filters to generate RF signals for subsequent transmission (e.g., by one or more of the one or more antennas 910).

In some embodiments, the PMC 912 may manage power provided to the baseband circuitry 904. In particular, the PMC 912 may control power-source selection, voltage scaling, battery charging, or DC-to-DC conversion. The PMC 912 may often be included when the device 900 is capable of being powered by a battery, for example, when the device is included in a UE. The PMC 912 may increase the power conversion efficiency while providing desirable implementation size and heat dissipation characteristics.

While FIG. 9 shows the PMC 912 coupled only with the baseband circuitry 904. However, in other embodiments, the PMC 9 12 may be additionally or alternatively coupled with, and perform similar power management operations for, other components such as, but not limited to, application circuitry 902, RF circuitry 906, or FEM 908.

In some embodiments, the PMC 912 may control, or otherwise be part of, various power saving mechanisms of the device 900. For example, if the device 900 is in an RRC_Connected state, where it is still connected to the RAN node as it expects to receive traffic shortly, then it may enter a state known as Discontinuous Reception Mode (DRX) after a period of inactivity. During this state, the device 900 may power down for brief intervals of time and thus save power.

If there is no data traffic activity for an extended period of time, then the device 900 may transition off to an RRC_Idle state, where it disconnects from the network and does not perform operations such as channel quality feedback, handover, etc. The device 900 goes into a very low power state and it performs paging where again it periodically wakes up to listen to the network and then powers down again. The device 900 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 902 and processors of the baseband circuitry 904 may be used to execute elements of one or more instances of a protocol stack. For example, processors of the baseband circuitry 904, alone or in combination, may be used execute Layer 3, Layer 2, or Layer 1 functionality, while processors of the application circuitry 904 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

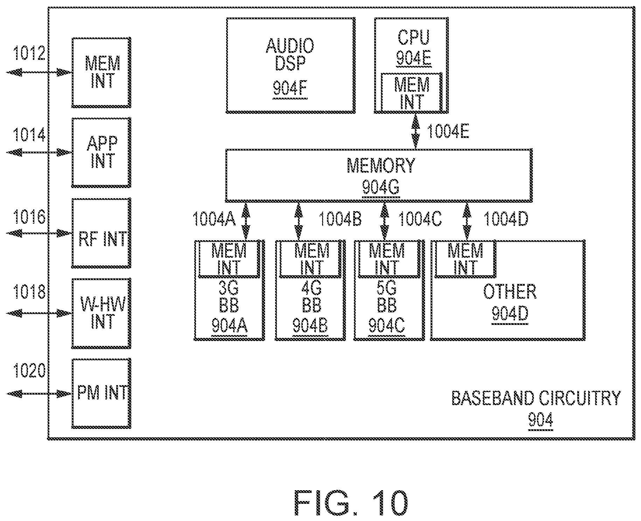

FIG. 10 illustrates example interfaces of baseband circuitry in accordance with some embodiments. As discussed above, the baseband circuitry 904 of FIG. 9 may comprise processors 904A-904E and a memory 904G utilized by said processors. Each of the processors 904A-904E may include a memory interface, 1004A-1004E, respectively, to send/receive data to/from the memory 904G.

The baseband circuitry 904 may further include one or more interfaces to communicatively couple to other circuitries/devices, such as a memory interface 1012 (e.g., an interface to send/receive data to/from memory external to the baseband circuitry 904), an application circuitry interface 1014 (e.g., an interface to send/receive data to/from the application circuitry 902 of FIG. 9), an RF circuitry interface 1016 (e.g., an interface to send/receive data to/from RF circuitry 906 of FIG. 9), a wireless hardware connectivity interface 1018 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 1020 (e.g., an interface to send/receive power or control signals to/from the PMC 912.

The following are example implementations of the subject matter described herein. It should be noted that any of the examples and the variations thereof described herein may be used in any permutation or combination of any other one or more examples or variations, although the scope of the claimed subject matter is not limited in these respects.

In example one, an apparatus of an evolved Node B (eNB) or a Fifth Generation (5G) Node B (gNB) comprises one or more baseband processors to generate a Radio Resource Control (RRC) Connection Reconfiguration Message RRCConnectionReconfiguration to include an information element (IE) to configure a user equipment (UE) to receive data from a Long-Term Evolution (LTE) node and from a New Radio (NR) node in a unified split bearer configuration, and encode the data to be transmitted to the UE via a master cell group (MCG) bearer, a secondary cell group (SCG) bearer, or a unified split bearer, and a memory to store the configuration message. Example two may include the subject matter of example one or any of the examples described herein, wherein the IE o RRC Connection Reconfiguration message indicates a bearer type change between the MCG bearer and the unified split bearer, or the SCG bearer and the unified split bearer. Example three may include the subject matter of example one or any of the examples described herein, wherein the one or more baseband processors are to perform a lossless reconfiguration of an LTE a Packet Data Convergence Protocol (PDCP) entity of a bearer to an NR PDCP entity, or to perform a lossless reconfiguration of an NR PDCP entity to an LTE PDCP entity for a bearer type change. Example four may include the subject matter of example one or any of the examples described herein, wherein the IE of the RRC Connection Reconfiguration message indicates whether to perform a bearer change with Packet Data Convergence Protocol (PDCP) re-establishment and key change for MCG bearer to SCG split bearer or for SCG split bearer to MCG bearer. Example five may include the subject matter of example one or any of the examples described herein, wherein the IE of the RRC Connection Reconfiguration message indicates whether to perform a bearer change with Packet Data Convergence Protocol (PDCP) data recovery and without key change for an MCG split bearer to an MCG bearer. Example six may include the subject matter of example one or any of the examples described herein, wherein the IE of the RRC Connection Reconfiguration message indicates whether to perform a bearer change without key change or Packet Data Convergence Protocol (PDCP) data recovery for an MCG bearer to an MCG split bearer. Example seven may include the subject matter of example one or any of the examples described herein, wherein the IE of the RRC Connection Reconfiguration message indicates to the UE whether to perform a media access control (MAC) reset on an SCG bear or an MCG bearer, or a combination thereof. Example eight may include the subject matter of example one or any of the examples described herein, wherein the IE of the RRC Connection Reconfiguration message is to configure the one or more baseband processors to allocate a previously unused logical channel identifier (LC-ID) for a data radio bearer (DRB) associated with PDCP re-establishment or bearer type change, wherein a media access control (MAC) entity is to discard a MAC protocol data unit (PDU) with an unknown LC- ID comprising the previously unused LC-ID of the DRB without involving a SCG or MCG MAC reset. Example nine may include the subject matter of example one or any of the examples described herein, wherein the IE of the RRC Connection Reconfiguration message is to configure the one or more baseband processors to include a 1-bit toggling bit in a Packet Data Convergence Protocol (PDCP) header of a PDCP protocol data unit (PDU) to indicate whether the PDCP PDU is ciphered or integrity protected by a previous key or a new key, wherein a PDCP entity discards the PDCP PDU with an indication of the previous key or deciphers the PDCP PDU with the previous key or the new key depending on the indication. Example ten may include the subject matter of example one or any of the examples described herein, wherein instead of the 1-bit toggling bit, the PDCP header of the PDCP PDU includes an index to indicate the previous key or the new key, wherein PDCP entity is to decipher a PDCP payload according to the key indexed in the PDCP header or to discard the PDCP payload upon receiving a PDCP PDU. Example eleven may include the subject matter of example one or any of the examples described herein, wherein the IE of the RRC Connection Reconfiguration message is to configure the one or more baseband processors to allow a Packet Data Convergence Protocol (PDCP) level integrity protected media access control (MAC) protocol data unit (PDU) using an old security key to be sent to a PDCP entity and to allow the PDCP entity to discard the MAC PDU due to failed integrity protection.

In example twelve an apparatus of a Fifth Generation (5G) Node B (gNB) comprises one or more baseband processors to encode a reconfiguration message RRCReconfiguration to include an information element (IE) to configure a data radio bearer (DRB) as a Packet Data Convergence Protocol (PDCP) and higher layers configuration coupled with one or more logical channels of radio link control and below, and to encode the reconfiguration message RRCReconfiguration to configure a change between a single connectivity bearer to multi-connectivity bearer by configuring or releasing one or more of the logical channels, and a memory to store the configuration. Example thirteen may include the subject matter of example twelve or any of the examples described herein, wherein the reconfiguration message includes an information element (IE) *RadioBearerConfig* to be transmitted to a user equipment (UE) to reset or reestablish one or more protocol layers. Example fourteen may include the subject matter of example twelve or any of the examples described herein, wherein the DRB is associated with two or more logical channels of a radio access technology (RAT) implemented by the gNB. Example fifteen may include the subject matter of example twelve or any of the examples described herein, wherein the RAT is compliant with a Long-Term Evolution (LTE) standard or a New Radio (NR) standard. Example sixteen may include the subject matter of example twelve or any of the examples described herein, wherein the one or more baseband processors are to encode a signal to be transmitted to a user equipment (UE) to indicated that one or more security keys associated with the DRB and a change of the one or more keys. Example seventeen may include the subject matter of example twelve or any of the examples described herein, wherein the one or more baseband processors are to configure the one or more logical channels to be associated with a master cell group (MCG), a secondary cell group (SCG), or any additional group, or a combination thereof. Example eighteen may include the subject matter of example twelve or any of the examples described herein, wherein the one or more baseband processors are to put one or more of the logical channels of one or more cell groups in a suspended state while allowing communication to continue over one or more other logical channels in one or more other cell groups. Example nineteen may include the subject matter of example twelve or any of the examples described herein, wherein the DRB is an uplink radio bearer or a downlink radio bearer, or a combination thereof. Example twenty may include the subject matter of example twelve or any of the examples described herein, wherein the one or more baseband processors are to encode a signal to indicate a node change as set of corresponding functions. Example twenty-one may include the subject matter of example twelve or any of the examples described herein, wherein the one or more baseband processors are to encode a signal to indicate a secondary node (SN) PDCP node change with a change of keys and re-establishment of PDCP and re-establishment or reset of one or more of the logical channels. Example twenty-two may include the subject matter of example twelve or any of the examples described herein, wherein the one or more baseband processors are to encode a signal to indicate secondary node (SN) logical channel by providing a new logical channel configuration for a corresponding cell group along with re-establishment reset of the new logical channel or one or more other logical channels. Example twenty-three may include the subject matter of example twelve or any of the examples described herein, wherein the one or more baseband processors are to cause a secondary node (SN) logical channel change by reconfiguring an old logical channel or by releasing the old logical channel and adding a new logical channel. Example twenty-four may include the subject matter of example twelve or any of the examples described herein, wherein the one or more baseband processors are to cause the SN logical channel change by reconfiguring one or more cell groups that are not changed to stop old data being passed to the PDCP layer when the PDCP layer changed configuration.

In example twenty-five, an apparatus of a user equipment (UE) comprises one or more baseband processors to decode a Radio Resource Control (RRC) Connection Reconfiguration message RRCConnectionReconfiguration from a network, wherein the RRC Connection Reconfiguration message is to include an information element (IE) to configure the UE to receive data from a Long-Term Evolution (LTE) node and from a New Radio (NR) node in a unified split bearer configuration, and to process the data received via a master cell group (MCG) bearer, a secondary cell group (SCG) bearer, or a unified split bearer, and a memory to store the configuration message. Example twenty-six may include the subject matter of example twenty-five or any of the examples described herein, wherein the IE of the RRC Connection Reconfiguration message indicates a bearer type change between the MCG bearer and the unified split bearer, or the SCG bearer and the unified split bearer. Example twenty-seven may include the subject matter of example twenty-five or any of the examples described herein, wherein the one or more baseband processors are to decode a lossless reconfiguration of an LTE a Packet Data Convergence Protocol (PDCP) entity of a bearer to an NR PDCP entity, or to decode a lossless reconfiguration of an NR PDCP entity to an LTE PDCP entity for a bearer type change. Example twenty-eight may include the subject matter of example twenty-five or any of the examples described herein, wherein the RRC Connection Reconfiguration message indicates whether to perform a bearer change with Packet Data Convergence Protocol (PDCP) re-establishment and key change for MCG bearer to SCG split bearer or for SCG split bearer to MCG bearer. Example twenty-nine may include the subject matter of example twenty-five or any of the examples described herein, wherein the IE of the RRC Connection Reconfiguration message indicates whether to process a bearer change with Packet Data Convergence Protocol (PDCP) data recovery and without key change for an MCG split bearer to an MCG bearer.

In example thirty, one or more machine-readable media may have instructions thereon that, when executed by an apparatus of an evolved Node B (eNB) or a Fifth Generation (5G) Node B (gNB), result in generating a Radio Resource Control (RRC) Connection Reconfiguration Message RRCConnectionReconfiguration to include an information element (IE) to configure a user equipment (UE) to receive data from a Long-Term Evolution (LTE) node and from a New Radio (NR) node in a unified split bearer configuration, and encoding the data to be transmitted to the UE via a master cell group (MCG) bearer, a secondary cell group (SCG) bearer, or a unified split bearer. Example thirty-one may include the subject matter of example thirty or any of the examples described herein, wherein the IE of the RRC Connection Reconfiguration message indicates a bearer type change between the MCG bearer and the unified split bearer, or the SCG bearer and the unified split bearer. Example thirty-two may include the subject matter of example thirty or any of the examples described herein, wherein the instructions, when executed, further result in performing a lossless reconfiguration of an LTE a Packet Data Convergence Protocol (PDCP) entity of a bearer to an NR PDCP entity, or to perform a lossless reconfiguration of an NR PDCP entity to an LTE PDCP entity for a bearer type change. Example thirty-three may include the subject matter of example thirty or any of the examples described herein, wherein the IE of the RRC Connection Reconfiguration message indicates whether to perform a bearer change with Packet Data Convergence Protocol (PDCP) re-establishment and key change for MCG bearer to SCG split bearer or for SCG split bearer to MCG bearer. Example thirty-four may include the subject matter of example thirty or any of the examples described herein, wherein the IE of the RRC Connection Reconfiguration message indicates whether to perform a bearer change with Packet Data Convergence Protocol (PDCP) data recovery and without key change for an MCG split bearer to an MCG bearer.

In example thirty-five, one or more machine-readable media having instructions thereon that, when executed by an apparatus of a Fifth Generation (5G) Node B (gNB), result in encoding a reconfiguration message RRCReconfiguration to include an information element (IE) to configure a data radio bearer (DRB) as a Packet Data Convergence Protocol (PDCP) and higher layers configuration coupled with one or more logical channels of radio link control and below, and encoding the reconfiguration message RRCReconfiguration to configure a change between a single connectivity bearer to multi-connectivity bearer by configuring or releasing one or more of the logical channels. Example thirty-six may include the subject matter of example thirty-five or any of the examples described herein, wherein the reconfiguration message includes an information element (IE) RadioBearerConfig to be transmitted to a user equipment (UE) to reset or reestablish one or more protocol layers. Example thirty-seven may include the subject matter of example thirty-five or any of the examples described herein, wherein the DRB is associated with two or more logical channels of a radio access technology (RAT) implemented by the gNB.

In example thirty-eight, one or more machine-readable media having instructions thereon that, when executed by an apparatus of a user equipment (UE), result in decoding a Radio Resource Control (RRC) Connection Reconfiguration message RRCConnectionReconfiguration from a network, wherein the RRC Connection Reconfiguration message is to include an information element (IE) to configure the UE to receive data from a Long-Term Evolution (LTE) node and from a New Radio (NR) node in a unified split bearer configuration, and processing the data received via a master cell group (MCG) bearer, a secondary cell group (SCG) bearer, or a unified split bearer. Example thirty-nine may include the subject matter of example thirty-eight or any of the examples described herein, wherein the IE of the RRC Connection Reconfiguration message indicates a bearer type change between the MCG bearer and the unified split bearer, or the SCG bearer and the unified split bearer. Example forty may include the subject matter of example thirty-eight or any of the examples described herein, wherein the instructions, when executed, further result in performing a lossless reconfiguration of an LTE a Packet Data Convergence Protocol (PDCP) entity of a bearer to an NR PDCP entity, or performing a lossless reconfiguration of an NR PDCP entity to an LTE PDCP entity for a bearer type change.

In example forty-five, an apparatus of a user equipment (UE) comprises one or more baseband processors to decode a reconfiguration message RRCReconfiguration that includes an information element (IE) to configure a data radio bearer (DRB) as a Packet Data Convergence Protocol (PDCP) and higher layers configuration coupled with one or more logical channels of radio link control and below, and to configure a change between a single connectivity bearer to multi-connectivity bearer or to change between a single connectivity MCG bearer to an SCG bearer by configuring or releasing one or more of the logical channels, and a memory to store the configuration. Example forty-six may include the subject matter of example forty-five or any of the examples described herein, wherein the one or more baseband processors are to decode the IE of the reconfiguration message to reset or reestablish one or more of protocol layers. Example forty-seven may include the subject matter of example forty-five or any of the examples described herein, wherein the DRB is associated with two or more logical channels of a radio access technology (RAT) implemented by the gNB. Example forty-eight may include the subject matter of example forty-five or any of the examples described herein, wherein the RAT is compliant with a Long-Term Evolution (LTE) standard or a New Radio (NR) standard. Example forty-nine is directed an apparatus comprising means to perform the instructions of any preceding example. Example fifty is direct to machine-readable storage including machine-readable instructions, when executed, to realize an apparatus of any preceding claim.

In the description herein and/or claims, the terms coupled and/or connected, along with their derivatives, may be used. In particular embodiments, connected may be used to indicate that two or more elements are in direct physical and/or electrical contact with each other. Coupled may mean that two or more elements are in direct physical and/or electrical contact. Coupled, however, may also mean that two or more elements may not be in direct contact with each other, but yet may still cooperate and/or interact with each other. For example, "coupled" may mean that two or more elements do not contact each other but are indirectly joined together via another element or intermediate elements. Finally, the terms "on," "overlying," and "over" may be used in the following description and claims. "On," "overlying," and "over" may be used to indicate that two or more elements are in direct physical contact with each other. It should be noted, however, that "over" may also mean that two or more elements are not in direct contact with each other. For example, "over" may mean that one element is above another element but not contact each other and may have another element or elements in between the two elements. Furthermore, the term "and/or" may mean "and", it may mean "or", it may mean "exclusive-or", it may mean "one", it may mean "some, but not all", it may mean "neither", and/or it may mean "both", although the scope of claimed subject matter is not limited in this respect. In the description herein and/or claims, the terms "comprise" and "include," along with their derivatives, may be used and are intended as synonyms for each other.

Although the claimed subject matter has been described with a certain degree of particularity, it should be recognized that elements thereof may be altered by persons skilled in the art without departing from the scope of claimed subject matter. It is believed that the subject matter pertaining to L2 handling for bearer type change and many of its attendant utilities will be understood by the forgoing description, and it will be apparent that various changes may be made in the form, construction and/or arrangement of the components thereof without departing from the scope of the claimed subject matter or without sacrificing all of its material advantages, the form herein before described being merely an explanatory embodiment thereof, and/or further without providing substantial change thereto.

## Claims

1. An apparatus (900) of an evolved Node B, eNB (811), or a Fifth Generation, 5G, Node B, gNB (811), comprising:
one or more baseband processors (904) configured to:
generate (412) a Radio Resource Control, RRC, Connection Reconfiguration Message to include an information element, IE, to configure a user equipment, UE (122), to receive data from a first node (112) and from a second node (114) in a unified split bearer configuration, wherein the IE of the RRC Connection Reconfiguration message is to configure the one or more baseband processors (904) to allocate a previously unused logical channel identifier, LC-ID, for a data radio bearer, DRB, associated with a Packet Data Convergence Protocol, PDCP, re-establishment or a bearer type change, wherein a media access control, MAC, entity is to discard a MAC protocol data unit, PDU, with an unknown LC- ID to release a previous logical channel associated with the DRB comprising the previously unused LC-ID of the DRB without involving a secondary cell group, SCG, or a master cell group, MCG, MAC reset such that data from the previous logical channel can be prevented from reaching a PDCP entity for the DRB without involving an SCG or a MCG MAC reset; and
encode the data to be transmitted to the UE (122) from the first node (112) and from the second node (114) via a MCG bearer, a SCG bearer, or a unified split bearer; and
a memory (904G) configured to store the RRC Connection Reconfiguration message.

2. The apparatus (900) of claim 1, wherein the IE of the RRC Connection Reconfiguration message indicates a bearer type change between the MCG bearer and the unified split bearer, or the SCG bearer and the unified split bearer.

3. The apparatus (900) of any one of claims 1-2, wherein the one or more baseband processors (904) are to perform a reconfiguration of an LTE a Packet Data Convergence Protocol, PDCP, entity of a bearer to an NR PDCP entity, or to perform a reconfiguration of an NR PDCP entity to an LTE PDCP entity for a bearer type change.

4. The apparatus (900) of any one of claims 1-3, wherein the IE of the RRC Connection Reconfiguration message indicates whether to perform a bearer change with Packet Data Convergence Protocol, PDCP, re-establishment and key change for MCG bearer to SCG split bearer or for SCG split bearer to MCG bearer.

5. The apparatus (900) of any one of claims 1-4, wherein the IE of the RRC Connection Reconfiguration message indicates whether to perform a bearer change with Packet Data Convergence Protocol, PDCP, data recovery and without key change for an MCG split bearer to an MCG bearer.

6. The apparatus (900) of any one of claims 1-5, wherein the IE of the RRC Connection Reconfiguration message indicates whether to perform a bearer change without key change or Packet Data Convergence Protocol, PDCP, data recovery for an MCG bearer to an MCG split bearer.

7. The apparatus (900) of any one of claims 1-6, wherein the IE of the RRC Connection Reconfiguration message is to configure the one or more baseband processors (904) to include a 1 -bit toggling bit in a Packet Data Convergence Protocol, PDCP, header of a PDCP protocol data unit, PDU, to indicate whether the PDCP PDU is ciphered or integrity protected by a previous key or a new key, wherein a PDCP entity discards the PDCP PDU with an indication of the previous key or deciphers the PDCP PDU with the previous key or the new key depending on the indication.

8. The apparatus (900) of claim 7, wherein instead of the 1-bit toggling bit, the PDCP header of the PDCP PDU includes an index to indicate the previous key or the new key, wherein PDCP entity is to decipher a PDCP payload according to the key indexed in the PDCP header or to discard the PDCP payload upon receiving a PDCP PDU.

9. The apparatus (900) of any one of claims 1-8, wherein the IE of the RRC Connection Reconfiguration message is to configure the one or more baseband processors to allow a Packet Data Convergence Protocol, PDCP, level integrity protected media access control, MAC, protocol data unit, PDU, using an old security key to be sent to a PDCP entity and to allow the PDCP entity to discard the MAC PDU due to failed integrity protection.

10. Machine-readable storage including machine-readable instructions run on one or more baseband processors configured to:
generate ( 412) a Radio Resource Control, RRC, Connection Reconfiguration Message to include an information element, IE, to configure a user equipment, UE (122 ), to receive data from a first node (112 ) and from a second node (114 ) in a unified split bearer configuration, wherein the IE of the RRC Connection Reconfiguration message is to configure the one or more baseband processors (904) to allocate a previously unused logical channel identifier, LC-ID, for a data radio bearer, DRB, associated with a Packet Data Convergence Protocol, PDCP, re-establishment or a bearer type change, wherein a media access control, MAC, entity is to discard a MAC protocol data unit, PDU, with an unknown LC- ID to release a previous logical channel associated with the DRB comprising the previously unused LC-ID of the DRB without involving a secondary cell grou, SCG, or a master cell group, MCG, MAC reset such that data from the previous logical channel can be prevented from reaching a PDCP entity for the DRB without involving an SCG or a MCG MAC reset; and encode the data to be transmitted to the UE (122) from the first node and from the second node via a MCG bearer, a SCG bearer, or a unified split bearer; and to store the RRC Connection Reconfiguration message in a memory (904G).

## Patentansprüche

1. Vorrichtung (900) eines evolved Node B, eNB (811), oder eines Fifth Generation, 5G, Node B, gNB (811), umfassend:
einen oder mehrere Basisbandprozessoren (904), die konfiguriert sind zum:
Erzeugen (412) einer Radio Resource Control, RRC, Verbindungsrekonfigurationsnachricht, um ein Informationselement, IE, zu enthalten, um eine Benutzervorrichtung (user equipment), UE (122), zu konfigurieren, um Daten von einem ersten Knoten (112) und von einem zweiten Knoten (114) in einer vereinheitlichten Split-Bearer-Konfiguration zu empfangen, wobei das IE der RRC-Verbindungsrekonfigurationsnachricht dazu dient, den einen oder die mehreren Basisbandprozessoren (904) zu konfigurieren, um eine zuvor nicht verwendete logische Kanalkennung, LC-ID, für einen Datenfunkträger, DRB, zuzuordnen, der mit einer Paketdatenkonvergenzprotokoll-, PDCP, Wiederherstellung oder einer Trägertypänderung assoziiert ist, wobei eine Medienzugriffssteuerungs-, MAC, Entität dazu dient, eine MAC-Protokolldateneinheit, PDU, mit einer unbekannten LC-ID zu verwerfen, um einen vorherigen logischen Kanal freizugeben, der mit dem DRB assoziiert ist, der die zuvor nicht verwendete LC-ID des DRB umfasst, ohne eine sekundäre Zellgruppen-, SCG, oder eine Master-Zellgruppen-, MCG, MAC-Rücksetzung zu involvieren, sodass verhindert werden kann, dass Daten von dem vorherigen logischen Kanal eine PDCP-Entität für den DRB erreichen, ohne eine SCG- oder eine MCG-MAC-Rücksetzung zu involvieren; und
Codieren der Daten, die von dem ersten Knoten (112) und von dem zweiten Knoten (114) über einen MCG-Träger, einen SCG-Träger oder einen vereinheitlichten Split-Bearer an die UE (122) zu übertragen sind; und
einen Speicher (904G), der konfiguriert ist, um die RRC-Verbindungsrekonfigurationsnachricht zu speichern.

2. Vorrichtung (900) nach Anspruch 1, wobei das IE der RRC-Verbindungsrekonfigurationsnachricht eine Trägertypänderung zwischen dem MCG-Träger und dem vereinheitlichten Split-Bearer oder dem SCG-Träger und dem vereinheitlichten Split-Bearer anzeigt.

3. Vorrichtung (900) nach einem der Ansprüche 1-2, wobei der eine oder die mehreren Basisbandprozessoren (904) eine Rekonfiguration einer LTE a Packet Data Convergence Protocol, PDCP, -Entität eines Bearers zu einer NR PDCP-Entität durchführen sollen oder eine Rekonfiguration einer NR PDCP-Entität zu einer LTE PDCP-Entität für eine Trägertypänderung durchführen sollen.

4. Vorrichtung (900) nach einem der Ansprüche 1-3, wobei das IE der RRC-Verbindungsrekonfigurationsnachricht anzeigt, ob eine Trägeränderung mit Packet Data Convergence Protocol, PDCP, -Wiederherstellung und Schlüsseländerung für MCG-Bearer zu SCG Split-Bearer oder für SCG Split-Bearer zu MCG-Bearer durchgeführt werden soll.

5. Vorrichtung (900) nach einem der Ansprüche 1-4, wobei das IE der RRC-Verbindungsrekonfigurationsnachricht anzeigt, ob eine Trägeränderung mit Packet Data Convergence Protocol, PDCP, -Datenwiederherstellung und ohne Schlüsseländerung für einen MCG Split-Bearer zu einem MCG-Bearer durchgeführt werden soll.

6. Vorrichtung (900) nach einem der Ansprüche 1-5, wobei das IE der RRC-Verbindungsrekonfigurationsnachricht anzeigt, ob eine Trägeränderung ohne Schlüsseländerung oder Packet Data Convergence Protocol, PDCP, - Datenwiederherstellung für einen MCG-Bearer zu einem MCG Split-Bearer durchgeführt werden soll.

7. Vorrichtung (900) nach einem der Ansprüche 1-6, wobei das IE der RRC-Verbindungsrekonfigurationsnachricht den einen oder die mehreren Basisbandprozessoren (904) konfigurieren soll, um ein 1-Bit-Toggling-Bit in einem Packet Data Convergence Protocol, PDCP, -Header einer PDCP-Protokolldateneinheit, PDU, einzuschließen, um anzuzeigen, ob die PDCP-PDU durch einen vorherigen Schlüssel oder einen neuen Schlüssel verschlüsselt oder integritätsgeschützt ist, wobei eine PDCP-Entität die PDCP-PDU mit einer Anzeige des vorherigen Schlüssels verwirft oder die PDCP-PDU mit dem vorherigen Schlüssel oder dem neuen Schlüssel in Abhängigkeit von der Anzeige entschlüsselt.

8. Vorrichtung (900) nach Anspruch 7, wobei anstelle des 1-Bit-Toggling-Bits der PDCP-Header der PDCP-PDU einen Index einschließt, um den vorherigen Schlüssel oder den neuen Schlüssel anzuzeigen, wobei die PDCP-Entität eine PDCP-Nutzlast gemäß dem in dem PDCP-Header indizierten Schlüssel entschlüsseln oder die PDCP-Nutzlast beim Empfangen einer PDCP-PDU verwerfen soll.

9. Vorrichtung (900) nach einem der Ansprüche 1-8, wobei das IE der RRC-Verbindungsrekonfigurationsnachricht den einen oder die mehreren Basisbandprozessoren konfigurieren soll, um zu ermöglichen, dass eine Paketdatenkonvergenzprotokoll-, PDCP, -ebene integritätsgeschützte Medienzugriffssteuerungs-, MAC, -Protokolldateneinheit, PDU, unter Verwendung eines alten Sicherheitsschlüssels zu einer PDCP-Entität gesendet wird, und um zu ermöglichen, dass die PDCP-Entität die MAC-PDU aufgrund eines fehlgeschlagenen Integritätsschutzes verwirft.

10. Maschinenlesbarer Speicher, der maschinenlesbare Anweisungen einschließt, die auf einem oder mehreren Basisbandprozessoren ausgeführt werden, die konfiguriert sind zum:
Erzeugen (412) einer Radio Resource Control, RRC, Verbindungsrekonfigurationsnachricht, um ein Informationselement, IE, zu enthalten, um eine Benutzervorrichtung (user equipment), UE (122), zu konfigurieren, um Daten von einem ersten Knoten (112) und von einem zweiten Knoten (114) in einer vereinheitlichten Split-Bearer-Konfiguration zu empfangen, wobei das IE der RRC-Verbindungsrekonfigurationsnachricht dazu dient, den einen oder die mehreren Basisbandprozessoren (904) zu konfigurieren, um eine zuvor nicht verwendete logische Kanalkennung, LC-ID, für einen Datenfunkträger, DRB, zuzuordnen, der mit einer Paketdatenkonvergenzprotokoll-, PDCP, Wiederherstellung oder einer Trägertypänderung assoziiert ist, wobei eine Medienzugriffssteuerungs-, MAC, Entität dazu dient, eine MAC-Protokolldateneinheit, PDU, mit einer unbekannten LC-ID zu verwerfen, um einen vorherigen logischen Kanal freizugeben, der mit dem DRB assoziiert ist, der die zuvor nicht verwendete LC-ID des DRB umfasst, ohne eine sekundäre Zellgruppen-, SCG, oder eine Master-Zellgruppen-, MCG, MAC-Rücksetzung zu involvieren, sodass verhindert werden kann, dass Daten von dem vorherigen logischen Kanal eine PDCP-Entität für den DRB erreichen, ohne eine SCG- oder eine MCG-MAC-Rücksetzung zu involvieren; und
Codieren der Daten, die von dem ersten Knoten (112) und von dem zweiten Knoten (114) über einen MCG-Träger, einen SCG-Träger oder einen vereinheitlichten Split-Bearer an die UE (122) zu übertragen sind; und
Speichern der RRC-Verbindungsrekonfigurationsnachricht in einem Speicher (904G).

## Revendications

1. Un appareil (900) d'un nœud B évolué, eNB (811), ou d'un nœud B de cinquième génération, 5G, gNB (811), comprenant :
un ou plusieurs processeurs de bande de base (904) configurés pour :
générer (412) un message de reconfiguration de connexion de contrôle de ressource radio, RRC, pour inclure un élément d'information, IE, pour configurer un équipement utilisateur, UE (122), pour recevoir des données à partir d'un premier nœud (112) et d'un second nœud (114) dans une configuration de bearer divisé unifié, dans lequel l'IE du message de reconfiguration de connexion RRC est destiné à configurer les un ou plusieurs processeurs de bande de base (904) pour attribuer un identifiant de canal logique, LC-ID, précédemment inutilisé pour un bearer radio de données, DRB, associé à un rétablissement de protocole de convergence de données de paquets, PDCP, ou à un changement de type de bearer, dans lequel une entité de contrôle d'accès au support, MAC, doit rejeter une unité de données de protocole, PDU, MAC avec un LC-ID inconnu pour libérer un canal logique précédent associé au DRB comprenant le LC-ID précédemment inutilisé du DRB sans impliquer un groupe de cellules secondaires, SCG, ou une réinitialisation de groupe de cellules maîtresses, MCG, MAC de sorte que les données du canal logique précédent puissent être empêchées d'atteindre une entité PDCP pour le DRB sans impliquer un SCG ou une réinitialisation MCG MAC ; et
coder les données à transmettre à l'UE (122) à partir du premier nœud (112) et du second nœud (114) via un bearer MCG, un bearer SCG ou un bearer divisé unifié ; et
une mémoire (904G) configurée pour stocker le message de reconfiguration de connexion RRC.

2. L'appareil (900) selon la revendication 1, dans lequel l'IE du message de reconfiguration de connexion RRC indique un changement de type de bearer entre le bearer MCG et le bearer divisé unifié, ou le bearer SCG et le bearer divisé unifié.

3. L'appareil (900) selon l'une des revendications 1 à 2, dans lequel les un ou plusieurs processeurs de bande de base (904) sont destinés à réaliser une reconfiguration d'une entité de protocole de convergence de données de paquets, PDCP, LTE d'un bearer vers une entité PDCP NR, ou à réaliser une reconfiguration d'une entité PDCP NR vers une entité PDCP LTE pour un changement de type de bearer.

4. L'appareil (900) selon l'une des revendications 1 à 3, dans lequel l'IE du message de reconfiguration de connexion RRC indique s'il y a lieu de réaliser un changement de bearer avec rétablissement de protocole de convergence de données de paquet, PDCP, et changement de clé pour le bearer MCG vers le bearer divisé SCG, ou bien pour le bearer divisé SCG vers le bearer MCG.

5. L'appareil (900) selon l'une des revendications 1 à 4, dans lequel l'IE du message de reconfiguration de connexion RRC indique s'il y a lieu de réaliser un changement de bearer avec récupération de données de protocole de convergence de données de paquets, PDCP, et sans changement de clé pour un bearer divisé MCG vers un bearer MCG.

6. L'appareil (900) selon l'une des revendications 1 à 5, dans lequel l'IE du message de reconfiguration de connexion RRC indique s'il y a lieu de réaliser un changement de bearer sans changement de clé ou récupération de données de protocole de convergence de données de paquets, PDCP, pour un bearer MCG vers un bearer divisé MCG.

7. L'appareil (900) selon l'une des revendications 1 à 6, dans lequel l'IE du message de reconfiguration de connexion RRC est destiné à configurer les un ou plusieurs processeurs de bande de base (904) pour inclure un bit de basculement sur 1 bit dans un en-tête de protocole de convergence de données de paquets, PDCP, d'une unité de données de protocole, PDU, PDCP pour indiquer si la PDU PDCP est chiffrée ou protégée en intégrité par une clé précédente ou une nouvelle clé, dans lequel une entité PDCP rejette la PDU PDCP avec une indication de la clé précédente ou déchiffre la PDU PDCP avec la clé précédente ou la nouvelle clé en fonction de l'indication.

8. L'appareil (900) selon la revendication 7, dans lequel, au lieu du bit de basculement sur 1 bit, l'en-tête PDCP de la PDU PDCP inclut un indice pour indiquer la clé précédente ou la nouvelle clé, dans lequel l'entité PDCP est destinée à déchiffrer une charge utile PDCP selon la clé indexée dans l'en-tête PDCP, ou à rejeter la charge utile PDCP à la réception d'une PDU PDCP.

9. L'appareil (900) selon l'une des revendications 1 à 8, dans lequel l'IE du message de reconfiguration de connexion RRC est destiné à configurer les un ou plusieurs processeurs de bande de base pour permettre à une unité de données de protocole, PDU, de contrôle d'accès au support, MAC, protégée en intégrité de niveau de protocole de convergence de données de paquets, PDCP, utilisant une ancienne clé de sécurité d'être envoyée à une entité PDCP et permettre à l'entité PDCP de rejeter la PDU MAC en raison d'une défaillance de la protection d'intégrité.

10. Dispositif de stockage lisible par machine incluant des instructions lisibles par machine exécutées sur un ou plusieurs processeurs de bande de base configurés pour :
générer (412) un message de reconfiguration de connexion de contrôle de ressource radio, RRC, pour inclure un élément d'information, IE, pour configurer un équipement utilisateur, UE (122), pour recevoir des données à partir d'un premier nœud (112) et d'un second nœud (114) dans une configuration de bearer divisé unifié, dans lequel l'IE du message de reconfiguration de connexion RRC est destiné à configurer les un ou plusieurs processeurs de bande de base (904) pour attribuer un identifiant de canal logique, LC-ID, précédemment inutilisé pour un bearer radio de données, DRB, associé à un rétablissement de protocole de convergence de données de paquets, PDCP, ou à un changement de type de bearer, dans lequel une entité de contrôle d'accès au support, MAC, doit rejeter une unité de données de protocole, PDU, MAC avec un LC-ID inconnu pour libérer un canal logique précédent associé au DRB comprenant le LC-ID précédemment inutilisé du DRB sans impliquer un groupe de cellules secondaires, SCG, ou une réinitialisation de groupe de cellules maîtresses, MCG, MAC de sorte que les données du canal logique précédent puissent être empêchées d'atteindre une entité PDCP pour le DRB sans impliquer un SCG ou une réinitialisation MCG MAC ; et coder les données à transmettre à l'UE (122) à partir du premier nœud et du second nœud via un bearer MCG, un bearer SCG ou un bearer divisé unifié ; et stocker le message de reconfiguration de connexion RRC dans une mémoire (904G).
